# EUROPEAN PATENT SPECIFICATION

(11) **EP 3 193 540 B1**
(45) Date of publication and mention of the grant of the patent: **17.07.2019**
(21) Application number: 14902985.2
(22) Date of filing: 29.09.2014
(51) Int. Cl.: H04W 48/18

(54) **WIRELESS COMMUNICATION METHOD, PROCESSOR AND WIRELESS TERMINAL**
DRAHTLOSKOMMUNIKATIONSVERFAHREN, PROZESSOR UND DRAHTLOSES ENDGERÄT
PROCÉDÉ DE COMMUNICATION SANS FIL, PROCESSEUR ET TERMINAL SANS FIL

(43) Date of publication of application: 19.07.2017
(73) Proprietor: Huawei Technologies Co., Ltd., Longgang District Shenzhen, Guangdong 518129 (CN)
(72) Inventor: DUAN, Xiaoyan, Shenzhen Guangdong 518129 (CN); JIN, Hui, Shenzhen Guangdong 518129 (CN)
(74) Representative: Maiwald Patent- und Rechtsanwaltsgesellschaft mbH
(86) International application number: PCT/CN2014/087820
(87) International publication number: WO 2016/049821

(56) References cited:
- EP-A1- 2 282 586
- EP-A1- 2 608 606
- CN-A- 1 874 591
- CN-A- 101 835 235
- CN-A- 101 895 966
- CN-A- 102 281 602
- CN-A- 102 724 736

## Description

### TECHNICAL FIELD

The present invention relates to the communications field, and in particular, to a wireless communication method, a processor, and a wireless terminal.

### BACKGROUND

A wireless mobile communications network experiences evolution from the 2nd generation mobile communications system (2G, for example, GSM) to the 3rd generation mobile communications system (3G, for example, UMTS) and to the 4th generation mobile communications system (4G). The 2G/3G/4G system uses different RATs (Radio Access Technology), for example, a GERAN (GSM EDGE Radio Access Network, GSM (Global System for Mobile Communications)/EDGE (Enhanced Data Rate for GSM Evolution) radio access network), a UTRAN (UMTS (Universal Mobile Telecommunications System) Terrestrial Radio Access Network), CDMA2000 (Code Division Multiple Access 2000), and an E-UTRAN (Evolved UTRAN, evolved universal terrestrial radio access network). An operator network PLMN (Public Land Mobile Network) generally provides multiple access networks in which different RATs are used. A wireless terminal of a current mobile communications network, for example, a smartphone, generally supports multiple radio access technologies.

When a wireless terminal is started and accesses a network after being powered off, or re-accesses a network after leaving a signal coverage area of the network, or reselects a network after network disconnection, or re-accesses a network after an offline mode is turned off, or in a similar scenario, the wireless terminal uses a radio access technology used before being powered off or before the network disconnection. For example, if the wireless terminal accesses a GSM network of a PLMN1 before being powered off, the wireless terminal still attempts to access the GSM network when being restarted and accessing the PLMN1.

When the wireless terminal is started, or reselects a network after network disconnection, or accesses a network after the offline mode is turned off, or in a similar scenario, a RAT used by the wireless terminal last time is used to access a PLMN, where the RAT is probably not a RAT that an operator expects the wireless terminal to use when accessing the PLMN.

EP 2 282 586 A1 discloses a multi-RAT capable wireless device that maintains a registration history of all wireless network, RAT combinations through which the device has previously attempted to register with networks. Having regard to this history and a preferred network, RAT combination list, the device selects such a combination, registers with a network and updates its preferred network, RAT combination list.

EP 2 608 606 A1 discloses a method of establishing a connection between a mobile terminal and a network, specifically for a case where the terminal is powered on again, or returns into a coverage area.

### SUMMARY

The present invention is defined by the appended claims.

According to a first aspect, an embodiment of the present invention provides a wireless communication method, where the method includes:
acquiring, by a wireless terminal, information about a public land mobile network PLMN and a corresponding radio access technology RAT, where the PLMN is a registered public land mobile network RPLMN and/or an equivalent public land mobile network EPLMN, and the information about a PLMN and a corresponding RAT;
determining, by the wireless terminal, whether to directly use a RAT used by the wireless terminal last time to access the RPLMN or the EPLMN; and
when a result of the determining is to directly use the RAT used by the wireless terminal last time to access the RPLMN or the EPLMN, select this RAT to access the RPLMN or the EPLMN; whereras,
if a result of the determining is no, selecting, by the wireless terminal from the information about a PLMN and a corresponding RAT, a RAT to access an RPLMN or an EPLMN that corresponds to the RAT.

The selecting, by the wireless terminal from the information about a PLMN and a corresponding RAT, a RAT to access the PLMN is specifically:
selecting, from the information about a PLMN and a corresponding RAT, a RAT with a higher priority to access an RPLMN or an EPLMN that is mapped to the RAT.

With reference to the first aspect, in a first possible implementation manner, the information about a PLMN and a corresponding RAT includes a list of a PLMN and a corresponding RAT, a list item of the list includes a combination of an RPLMN and a RAT or a combination of an EPLMN and a RAT, and the combination of an RPLMN and a RAT or the combination of an EPLMN and a RAT is arranged according to a priority order or indicated by a priority.

With reference to the first possible implementation manner of the first aspect, in a second possible implementation manner not presently claimed, the information about a PLMN and a corresponding RAT is acquired by the wireless terminal from a memory of the wireless terminal or from a file of an operator controlled PLMN selector with access technology in a subscriber identity module.

With reference to the first possible implementation manner of the first aspect, in a third possible implementation manner not presently claimed, the information about a PLMN and a corresponding RAT is acquired by the wireless terminal from a memory of the wireless terminal or from a file of a user controlled PLMN selector with access technology in a subscriber identity module.

With reference to the first possible implementation manner of the first aspect, in a fourth possible implementation manner not presently claimed, the method further includes:
determining whether the PLMN is a home PLMN HPLMN or an equivalent home PLMN EHPLMN of the wireless terminal; where
if the PLMN is the HPLMN or the EHPLMN of the wireless terminal, a list item of the information about a PLMN and a corresponding RAT is a combination of an HPLMN and a RAT or a combination of an EHPLMN and a RAT, and the information about a PLMN and a corresponding RAT is acquired by the wireless terminal from a memory of the wireless terminal or from a file of a home public land mobile network selector with RAT in a subscriber identity module; or
if the PLMN is not the HPLMN or the EHPLMN of the wireless terminal, it is determined whether an operator controlled PLMN selector with access technology includes a RAT list of an RPLMN or an EPLMN, where if the operator controlled PLMN selector with access technology includes a RAT list of an RPLMN or an EPLMN, the wireless terminal acquires information that is about a PLMN and a corresponding RAT and that is of an RPLMN or an EPLMN from a memory of the wireless terminal or from a file of an operator controlled PLMN selector with access technology in a subscriber identity module, or if the operator controlled PLMN selector with access technology does not include a RAT list of an RPLMN or an EPLMN, the wireless terminal acquires information that is about a PLMN and a corresponding RAT and that is of an RPLMN or an EPLMN from a memory of the wireless terminal or from a file of a user controlled PLMN selector with access technology in a subscriber identity module.

With reference to the first possible implementation manner of the first aspect, or the second possible implementation manner of the first aspect, or the third possible implementation manner of the first aspect, or the fourth possible implementation manner of the first aspect, in a fifth possible implementation manner, the selecting, by the wireless terminal from the information about a PLMN and a corresponding RAT, a RAT with a higher priority to access the PLMN specifically includes: according to priorities that are indicated by a third parameter in the memory of the wireless terminal or by a fourth parameter in a SIM/USIM and that are of an evolved universal terrestrial radio access network time division multiplexing E-UTRAN TDD access technology and an evolved universal terrestrial radio access network frequency division multiplexing E-UTRAN FDD access technology, determining priorities of E-UTRAN TDD and E-UTRAN FDD, and selecting a RAT with a higher priority to access the RPLMN or the EPLMN; and/or
according to priorities that are indicated by a third parameter in the memory of the wireless terminal or by a fourth parameter in a SIM/USIM and that are of a universal terrestrial radio access network frequency division multiplexing UTRAN FDD access technology and a universal terrestrial radio access network time division multiplexing UTRAN TDD access technology, determining priorities of UTRAN FDD and UTRAN TDD, and selecting a RAT with a higher priority to access the RPLMN or the EPLMN.

The selecting, from the information about a PLMN and a corresponding RAT, a RAT with a higher priority to access the RPLMN or the EPLMN that corresponds to the RAT specifically includes:
acquiring RAT priority information by using the RPLMN or the EPLMN, and selecting the RAT with a higher priority to access the RPLMN or the EPLMN.

In a possible implementation manner not presently claimed, the acquiring RAT priority information by using the RPLMN or the EPLMN, and selecting the RAT with a higher priority to access the RPLMN or the EPLMN specifically includes:
selecting, according to the RAT priority information that is included in system information broadcast in a cell of the RPLMN or the EPLMN, the RAT with a higher priority to access the RPLMN or the EPLMN.

The acquiring RAT priority information by using the RPLMN or the EPLMN, and selecting the RAT with a higher priority to access the RPLMN or the EPLMN specifically includes:
receiving a registration accept message or a location updating accept message that is sent by the RPLMN or the EPLMN, and selecting, according to the RAT priority information included in the registration accept message or the location updating accept message, the RAT with a higher priority to access the RPLMN or the EPLMN.

With reference to the first aspect, or the first possible implementation manner of the first aspect, or the second possible implementation manner of the first aspect, or the third possible implementation manner of the first aspect, or the fourth possible implementation manner of the first aspect, or the fifth possible implementation manner of the first aspect, in a sixth possible implementation manner, the determining, by the wireless terminal, whether to directly use a RAT used by the wireless terminal last time to access the PLMN is specifically:
determining, by the wireless terminal according to a first parameter in the memory or a second parameter in the subscriber identity module, whether to directly use the RAT used by the wireless terminal last time to access the PLMN.

According to a second aspect not presently claimed, a processor is provided, where the processor includes:
an acquiring unit, configured to acquire information about a PLMN of a wireless terminal and a corresponding RAT, where the PLMN is a registered public land mobile network RPLMN and/or an equivalent public land mobile network EPLMN;
a first determining unit, configured to determine whether to directly use a RAT used last time to access the PLMN that is the RPLMN and/or the EPLMN; and
an access unit, configured to: if the determining unit determines not to directly use the RAT used by the wireless terminal last time to access the RPLMN or the EPLMN, select, from the information about a PLMN and a corresponding RAT, a RAT to access an RPLMN or an EPLMN that corresponds to the RAT.

With reference to the second aspect, in a first possible implementation manner, the access unit selects, from the information about a PLMN and a corresponding RAT, a RAT with a higher priority to access an RPLMN or an EPLMN that corresponds to the RAT.

With reference to the second aspect, or the first possible implementation manner of the second aspect, in a second possible implementation manner, the information about a PLMN and a corresponding RAT that is acquired by the acquiring unit includes a list of a PLMN and a corresponding RAT, a list item of the list includes a combination of a registered public land mobile network RPLMN and a RAT or a combination of an equivalent public land mobile network EPLMN and a RAT, and the combination of an RPLMN and a RAT or the combination of an EPLMN and a RAT is arranged according to a priority order or indicated by a priority.

With reference to the second possible implementation manner of the second aspect, in a third possible implementation manner, the acquiring unit acquires the information about a PLMN and a corresponding RAT from a memory of the wireless terminal or from a file of an operator controlled PLMN selector with access technology in a subscriber identity module.

With reference to the second possible implementation manner of the second aspect, in a fourth possible implementation manner, the acquiring unit acquires the information about a PLMN and a corresponding RAT from a memory of the wireless terminal or from a file of a user controlled PLMN selector with access technology in a subscriber identity module.

With reference to the second possible implementation manner of the second aspect, in a fifth possible implementation manner, the processor further includes a second determining unit, and the second determining unit is configured to determine whether the PLMN is a home PLMN HPLMN or an equivalent home PLMN EHPLMN of the wireless terminal; where
if the PLMN is the HPLMN or the EHPLMN of the wireless terminal, a list item of the information about a PLMN and a corresponding RAT is a combination of an HPLMN and a RAT or a combination of an EHPLMN and a RAT, and the information about a PLMN and a corresponding RAT is acquired by the acquiring unit from a memory of the wireless terminal or from a file of a home public land mobile network selector with RAT in a subscriber identity module; or
if the PLMN is not the HPLMN or the EHPLMN of the wireless terminal, it is determined whether an operator controlled PLMN selector with access technology includes a RAT list of an RPLMN or an EPLMN, where if the operator controlled PLMN selector with access technology includes a RAT list of an RPLMN or an EPLMN, the acquiring unit acquires information that is about a PLMN and a corresponding RAT and that is of an RPLMN or an EPLMN from a memory of the wireless terminal or from a file of an operator controlled PLMN selector with access technology in a subscriber identity module, or if the operator controlled PLMN selector with access technology does not include a RAT list of an RPLMN or an EPLMN, the acquiring unit acquires information that is about a PLMN and a corresponding RAT and that is of an RPLMN or an EPLMN from a memory of the wireless terminal or from a file of a user controlled PLMN selector with access technology in a subscriber identity module.

With reference to the first possible implementation manner of the second aspect, or the second possible implementation manner of the second aspect, or the third possible implementation manner of the second aspect, or the fourth possible implementation manner of the second aspect, or the fifth possible implementation manner of the second aspect, in a sixth possible implementation manner, that the access unit selects, from the information about a PLMN and a corresponding RAT, a RAT with a higher priority to access the RPLMN or the EPLMN specifically includes:
determining priorities of an evolved universal terrestrial radio access network time division multiplexing E-UTRAN TDD access technology and an evolved universal terrestrial radio access network frequency division multiplexing E-UTRAN FDD access technology, and selecting a RAT with a higher priority that corresponds to E-UTRAN TDD and E-UTRAN FDD to access the RPLMN or the EPLMN; and/or
determining priorities of a universal terrestrial radio access network frequency division multiplexing UTRAN FDD access technology and a universal terrestrial radio access network time division multiplexing UTRAN TDD access technology, and selecting a RAT with a higher priority that corresponds to UTRAN FDD and UTRAN TDD to access the RPLMN or the EPLMN.

With reference to the first possible implementation manner of the second aspect, in a seventh possible implementation manner, the processor further includes a second acquiring unit, the second acquiring unit is configured to acquire RAT priority information by using the RPLMN or the EPLMN, and the access unit selects, according to the RAT priority information that is acquired by the second acquiring unit by using the PLMN, the RAT with a higher priority to access the RPLMN or the EPLMN that corresponds to the RAT.

With reference to the seventh possible implementation manner of the second aspect, in an eighth possible implementation manner, that the second acquiring unit acquires RAT priority information by using the RPLMN or the EPLMN is specifically: the second acquiring unit acquires the RAT priority information according to system information broadcast in a cell of the RPLMN or the EPLMN.

With reference to the seventh possible implementation manner of the second aspect, in a ninth possible implementation manner, that the second acquiring unit acquires RAT priority information by using the RPLMN or the EPLMN is specifically: the second acquiring unit acquires the RAT priority information according to registration accept information or location updating accept information that is sent by the RPLMN or the EPLMN.

With reference to the second aspect, or the first possible implementation manner of the second aspect, or the second possible implementation manner of the second aspect, or the third possible implementation manner of the second aspect, or the fourth possible implementation manner of the second aspect, or the fifth possible implementation manner of the second aspect, or the sixth possible implementation manner of the second aspect, or the seventh possible implementation manner of the second aspect, or the eighth possible implementation manner of the second aspect, or the ninth possible implementation manner of the second aspect, in a tenth possible implementation manner, that the first determining unit determines whether to directly use a RAT used by the wireless terminal last time to access the PLMN is specifically:
the first determining unit determines, according to a first parameter in the memory of the wireless terminal or a second parameter in the subscriber identity module, whether to directly use the RAT used by the wireless terminal last time to access the RPLMN or the EPLMN.

According to a third aspect not presently claimed, a wireless terminal is provided, where the wireless terminal includes the processor according to any one of the second aspect and the first to the tenth possible implementation manners of the second aspect.

According to a fourth aspect not presently claimed, an embodiment of the present invention provides a wireless communication method, where the method includes:
acquiring, by a wireless terminal, information about a public land mobile network PLMN and a corresponding radio access technology RAT, where the PLMN is a registered public land mobile network RPLMN and/or an equivalent public land mobile network EPLMN, and the information about a PLMN and a corresponding RAT;
determining, by the wireless terminal, whether to directly use a RAT with a higher priority to access the RPLMN or the EPLMN; and
if a result of the determining is yes, selecting, by the wireless terminal from the information about a PLMN and a corresponding RAT, a RAT to access an RPLMN or an EPLMN that corresponds to the RAT.

With reference to the fourth aspect, in a first possible implementation manner, the selecting, by the wireless terminal from the information about a PLMN and a corresponding RAT, a RAT to access the PLMN is specifically:
selecting, from the information about a PLMN and a corresponding RAT, a RAT with a higher priority to access an RPLMN or an EPLMN that corresponds to the RAT, and the information about a PLMN and a corresponding RAT.

With reference to the fourth aspect or the first possible implementation manner of the fourth aspect, in a second possible implementation manner, the information about a PLMN and a corresponding RAT includes a list of a PLMN and a corresponding RAT, a list item of the list includes a combination of an RPLMN and a RAT or a combination of an EPLMN and a RAT, and the combination of an RPLMN and a RAT or the combination of an EPLMN and a RAT is arranged according to a priority order or indicated by a priority.

With reference to the second possible implementation manner of the fourth aspect, in a third possible implementation manner, the information about a PLMN and a corresponding RAT is acquired by the wireless terminal from a memory of the wireless terminal or from a file of an operator controlled PLMN selector with access technology in a subscriber identity module.

With reference to the second possible implementation manner of the fourth aspect, in a fourth possible implementation manner, the information about a PLMN and a corresponding RAT is acquired by the wireless terminal from a memory of the wireless terminal or from a file of a user controlled PLMN selector with access technology in a subscriber identity module.

With reference to the second possible implementation manner of the fourth aspect, in a fifth possible implementation manner, the method further includes:
determining whether the PLMN is a home PLMN HPLMN or an equivalent home PLMN EHPLMN of the wireless terminal; where
if the PLMN is the HPLMN or the EHPLMN of the wireless terminal, a list item of the information about a PLMN and a corresponding RAT is a combination of an HPLMN and a RAT or a combination of an EHPLMN and a RAT, and the information about a PLMN and a corresponding RAT is acquired by the wireless terminal from a memory of the wireless terminal or from a file of a home public land mobile network selector with RAT in a subscriber identity module; or
if the PLMN is not the HPLMN or the EHPLMN of the wireless terminal, it is determined whether an operator controlled PLMN selector with access technology includes a RAT list of an RPLMN or an EPLMN, where if the operator controlled PLMN selector with access technology includes a RAT list of an RPLMN or an EPLMN, the wireless terminal acquires information that is about a PLMN and a corresponding RAT and that is of an RPLMN or an EPLMN from a memory of the wireless terminal or from a file of an operator controlled PLMN selector with access technology in a subscriber identity module, or if the operator controlled PLMN selector with access technology does not include a RAT list of an RPLMN or an EPLMN, the wireless terminal acquires information that is about a PLMN and a corresponding RAT and that is of an RPLMN or an EPLMN from a memory of the wireless terminal or from a file of a user controlled PLMN selector with access technology in a subscriber identity module.

With reference to the first possible implementation manner of the fourth aspect, or the second possible implementation manner of the fourth aspect, or the third possible implementation manner of the fourth aspect, or the fourth possible implementation manner of the fourth aspect, or the fifth possible implementation manner of the fourth aspect, in a sixth possible implementation manner, the selecting, by the wireless terminal from the information about a PLMN and a corresponding RAT, a RAT with a higher priority to access the PLMN specifically includes: according to priorities that are indicated by a third parameter in the memory of the wireless terminal or by a fourth parameter in a SIM/USIM and that are of an evolved universal terrestrial radio access network time division multiplexing E-UTRAN TDD access technology and an evolved universal terrestrial radio access network frequency division multiplexing E-UTRAN FDD access technology, determining priorities of E-UTRAN TDD and E-UTRAN FDD, and selecting a RAT with a higher priority to access the RPLMN or the EPLMN; and/or
according to priorities that are indicated by a third parameter in the memory of the wireless terminal or by a fourth parameter in a SIM/USIM and that are of a universal terrestrial radio access network frequency division multiplexing UTRAN FDD access technology and a universal terrestrial radio access network time division multiplexing UTRAN TDD access technology, determining priorities of UTRAN FDD and UTRAN TDD, and selecting a RAT with a higher priority to access the RPLMN or the EPLMN.

With reference to the first possible implementation manner of the fourth aspect, in a seventh possible implementation manner, the selecting, from the information about a PLMN and a corresponding RAT, a RAT with a higher priority to access the PLMN specifically includes:
acquiring RAT priority information by using the RPLMN or the EPLMN, and selecting the RAT with a higher priority to access the RPLMN or the EPLMN.

With reference to the seventh possible implementation manner of the fourth aspect, in an eighth possible implementation manner, the acquiring RAT priority information by using the RPLMN or the EPLMN, and selecting the RAT with a higher priority to access the RPLMN or the EPLMN specifically includes:
selecting, according to the RAT priority information that is included in system information broadcast in a cell of the RPLMN or the EPLMN, the RAT with a higher priority to access the RPLMN or the EPLMN.

With reference to the seventh possible implementation manner of the fourth aspect, in a ninth possible implementation manner, the acquiring RAT priority information by using the RPLMN or the EPLMN, and selecting the RAT with a higher priority to access the RPLMN or the EPLMN specifically includes:
receiving a registration accept message or a location updating accept message that is sent by the RPLMN or the EPLMN, and selecting, according to the RAT priority information included in the registration accept message or the location updating accept message, the RAT with a higher priority to access the RPLMN or the EPLMN.

With reference to the fourth aspect, or the first possible implementation manner of the fourth aspect, or the second possible implementation manner of the fourth aspect, or the third possible implementation manner of the fourth aspect, or the fourth possible implementation manner of the fourth aspect, or the fifth possible implementation manner of the fourth aspect, or the sixth possible implementation manner of the fourth aspect, or the seventh possible implementation manner of the fourth aspect, or the eighth possible implementation manner of the fourth aspect, or the ninth possible implementation manner of the fourth aspect, in a tenth possible implementation manner, the determining, by the wireless terminal, whether to directly use a RAT used by the wireless terminal last time to access the PLMN is specifically:
determining, by the wireless terminal according to a first parameter in the memory or a second parameter in the subscriber identity module, whether to directly use the RAT used by the wireless terminal last time to access the PLMN.

According to a fifth aspect not presently claimed, a processor is provided, where the processor includes:
an acquiring unit, configured to acquire information about a PLMN of a wireless terminal and a corresponding RAT, where the PLMN is a registered public land mobile network RPLMN and/or an equivalent public land mobile network EPLMN;
a first determining unit, configured to determine whether to directly use a RAT with a higher priority to access the RPLMN and/or the EPLMN; and
an access unit, configured to: if the determining unit determines to directly use a RAT used by the wireless terminal last time to access the RPLMN or the EPLMN, select, from the information about a PLMN and a corresponding RAT, a RAT to access an RPLMN or an EPLMN that corresponds to the RAT.

With reference to the fifth aspect, in a first possible implementation manner, the access unit selects, from the information about a PLMN and a corresponding RAT, a RAT with a higher priority to access an RPLMN or an EPLMN that corresponds to the RAT.

With reference to the fifth aspect, or the first possible implementation manner of the fifth aspect, in a second possible implementation manner, the information about a PLMN and a corresponding RAT that is acquired by the acquiring unit includes a list of a PLMN and a corresponding RAT, a list item of the list includes a combination of a registered public land mobile network RPLMN and a RAT or a combination of an equivalent public land mobile network EPLMN and a RAT, and the combination of an RPLMN and a RAT or the combination of an EPLMN and a RAT is arranged according to a priority order or indicated by a priority.

With reference to the second possible implementation manner of the fifth aspect, in a third possible implementation manner, the acquiring unit acquires the information about a PLMN and a corresponding RAT from a memory of the wireless terminal or from a file of an operator controlled PLMN selector with access technology in a subscriber identity module.

With reference to the second possible implementation manner of the fifth aspect, in a fourth possible implementation manner, the acquiring unit acquires the information about a PLMN and a corresponding RAT from a memory of the wireless terminal or from a file of a user controlled PLMN selector with access technology in a subscriber identity module.

With reference to the second possible implementation manner of the fifth aspect, in a fifth possible implementation manner, the processor further includes a second determining unit, and the second determining unit is configured to determine whether the PLMN is a home PLMN HPLMN or an equivalent home PLMN EHPLMN of the wireless terminal; where
if the PLMN is the HPLMN or the EHPLMN of the wireless terminal, a list item of the information about a PLMN and a corresponding RAT is a combination of an HPLMN and a RAT or a combination of an EHPLMN and a RAT, and the information about a PLMN and a corresponding RAT is acquired by the acquiring unit from a memory of the wireless terminal or from a file of a home public land mobile network selector with RAT in a subscriber identity module; or
if the PLMN is not the HPLMN or the EHPLMN of the wireless terminal, it is determined whether an operator controlled PLMN selector with access technology includes a RAT list of an RPLMN or an EPLMN, where if the operator controlled PLMN selector with access technology includes a RAT list of an RPLMN or an EPLMN, the acquiring unit acquires information that is about a PLMN and a corresponding RAT and that is of an RPLMN or an EPLMN from a memory of the wireless terminal or from a file of an operator controlled PLMN selector with access technology in a subscriber identity module, or if the operator controlled PLMN selector with access technology does not include a RAT list of an RPLMN or an EPLMN, the acquiring unit acquires information that is about a PLMN and a corresponding RAT and that is of an RPLMN or an EPLMN from a memory of the wireless terminal or from a file of a user controlled PLMN selector with access technology in a subscriber identity module.

With reference to the first possible implementation manner of the fifth aspect, or the second possible implementation manner of the fifth aspect, or the third possible implementation manner of the fifth aspect, or the fourth possible implementation manner of the fifth aspect, or the fifth possible implementation manner of the fifth aspect, in a sixth possible implementation manner, that the access unit selects, from the information about a PLMN and a corresponding RAT, a RAT with a higher priority to access the RPLMN or the EPLMN specifically includes:
determining priorities of an evolved universal terrestrial radio access network time division multiplexing E-UTRAN TDD access technology and an evolved universal terrestrial radio access network frequency division multiplexing E-UTRAN FDD access technology, and selecting a RAT with a higher priority that corresponds to E-UTRAN TDD and E-UTRAN FDD to access the RPLMN or the EPLMN; and/or
determining priorities of a universal terrestrial radio access network frequency division multiplexing UTRAN FDD access technology and a universal terrestrial radio access network time division multiplexing UTRAN TDD access technology, and selecting a RAT with a higher priority that corresponds to UTRAN FDD and UTRAN TDD to access the RPLMN or the EPLMN.

With reference to the first possible implementation manner of the fifth aspect, in a seventh possible implementation manner, the processor further includes a second acquiring unit, the second acquiring unit is configured to acquire RAT priority information by using the RPLMN or the EPLMN, and the access unit selects, according to the RAT priority information that is acquired by the second acquiring unit by using the PLMN, the RAT with a higher priority to access the PLMN.

With reference to the seventh possible implementation manner of the fifth aspect, in an eighth possible implementation manner, that the second acquiring unit acquires RAT priority information by using the RPLMN or the EPLMN is specifically: the second acquiring unit acquires the RAT priority information according to system information broadcast in a cell of the RPLMN or the EPLMN.

With reference to the seventh possible implementation manner of the fifth aspect, in a ninth possible implementation manner, that the second acquiring unit acquires RAT priority information by using the RPLMN or the EPLMN is specifically: the second acquiring unit acquires the RAT priority information according to registration accept information or location updating accept information that is sent by the RPLMN or the EPLMN.

With reference to the fifth aspect, or the first possible implementation manner of the fifth aspect, or the second possible implementation manner of the fifth aspect, or the third possible implementation manner of the fifth aspect, or the fourth possible implementation manner of the fifth aspect, or the fifth possible implementation manner of the fifth aspect, or the sixth possible implementation manner of the fifth aspect, or the seventh possible implementation manner of the fifth aspect, or the eighth possible implementation manner of the fifth aspect, or the ninth possible implementation manner of the fifth aspect, in a tenth possible implementation manner, that the first determining unit determines whether to directly use a RAT used by the wireless terminal last time to access the PLMN is specifically:
the first determining unit determines, according to a first parameter in the memory of the wireless terminal or a second parameter in the subscriber identity module, whether to directly use the RAT used by the wireless terminal last time to access the RPLMN or the EPLMN.

According to a sixth aspect not presently claimed, a wireless terminal is provided, where the wireless terminal includes the processor according to any one of the fifth aspect and the first to the tenth possible implementation manners of the fifth aspect.

According to the embodiments of the present invention, when restarted, back to a network coverage area, or accessing a PLMN after an offline mode is turned off, a wireless terminal may choose to access the PLMN by using a RAT used last time or access the PLMN according to a RAT of the PLMN that has a higher priority, so that a requirement that an operator expects the wireless terminal to use a specific RAT can be satisfied, and optimum use of a network resource of the operator is implemented. Moreover, the terminal preferentially uses an access technology with a highest priority in a network, so that the terminal can make full use of a communication capability of the terminal, improving communication performance.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic flowchart of a wireless communication method according to Embodiment 1 of the present invention;
FIG. 2 is a schematic flowchart of a wireless communication method according to Embodiment 2 of the present invention;
FIG. 3 is a schematic flowchart of a wireless communication method according to Embodiment 3 of the present invention;
FIG. 4 is a schematic flowchart of a wireless communication method according to Embodiment 4 of the present invention;
FIG. 5 is a schematic structural diagram of a processor according to Embodiment 5 of the present invention;
FIG. 6 is a schematic structural diagram of a processor according to Embodiment 6 of the present invention;
FIG. 7 is a schematic structural diagram of a processor according to Embodiment 7 of the present invention;
FIG. 8 is a schematic flowchart of a wireless communication method according to Embodiment 8 of the present invention;
FIG. 9 is a schematic flowchart of a wireless communication method according to Embodiment 9 of the present invention;
FIG. 10 is a schematic flowchart of a wireless communication method according to Embodiment 10 of the present invention;
FIG. 11 is a schematic structural diagram of a processor according to Embodiment 11 of the present invention;
FIG. 12 is a schematic structural diagram of a processor according to Embodiment 12 of the present invention; and
FIG. 13 is a schematic structural diagram of a processor according to Embodiment 13 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

It should be understood that, when ordinal numbers such as "first" and "second" are mentioned in the embodiments of the present invention, they are only used for distinguishing unless they definitely show a sequence according to a context.

A wireless terminal in the embodiments of the present invention supports at least one RAT. The RAT may be any radio access technology, for example, E-UTRA (Evolved Universal Terrestrial Radio Access), UTRA (Universal Telecommunication Radio Access), a GERAN (GSM EDGE Radio Access Network)-CS, GERAN-PS, or another radio access technology, where GSM is an abbreviation of Global System for Mobile Communications, and EDGE is an abbreviation of Enhanced Data rates for GSM Evolution.

In the embodiments of the present invention, the RAT may be different network standards. For example, the RAT may be 2G (including 2G PS and 2G CS) or a 2G PS domain; or may be 3G; or may be a 2G PS domain and 3G, or 2G and 3G; or may be 4G, where the 2G may be a GERAN, the 2G PS may be GERAN-PS, the 3G may be UTRA, and the 4G may be E-UTRA. When the 4G is E-UTRA (that is, a second RAT is E-UTRA), a 4G network is an E-UTRAN (Evolved Universal Terrestrial Radio Access Network) (that is, a second RAT network is an E-UTRAN). Certainly, the RAT is not limited thereto.

A wireless terminal in the embodiments of the present invention may be, for example, a mobile phone, a tablet computer, a notebook computer, a UMPC (ultra-mobile personal computer), a netbook, or a PDA (personal digital assistant).

A subscriber identity module in the embodiments of the present invention includes but is not limited to a SIM (Subscriber Identity Module) or a USIM (Universal Subscriber Identity Module).

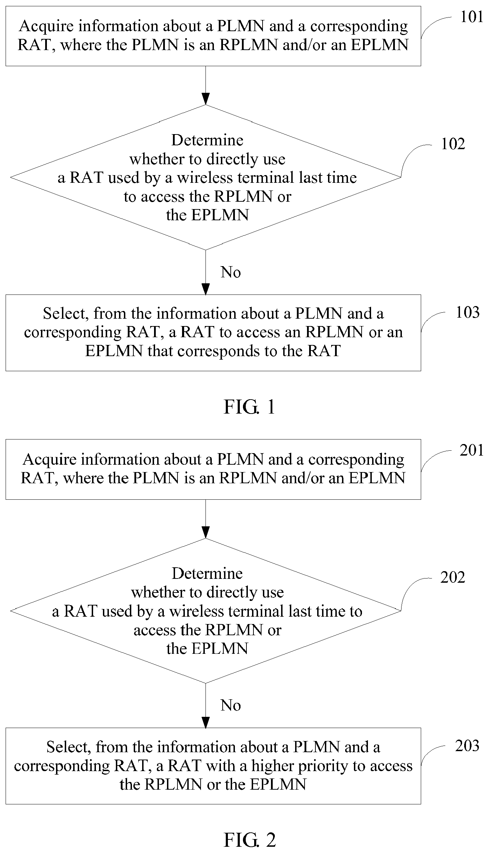

As shown in FIG. 1, FIG. 1 is a schematic flowchart of a wireless communication method according to Embodiment 1 of the present invention. As shown in FIG. 1, the method includes:
Step 101: Acquire information about a PLMN and a corresponding RAT, where the PLMN is an RPLMN (Registered PLMN) or an EPLMN (Equivalent PLMN).

A subscriber identity module is in an available state when a wireless terminal is started or restored to a network coverage state from a non-network coverage state or after an offline mode is turned off. It is determined whether the subscriber identity module stores a PLMN registered by the wireless terminal before network disconnection. The network disconnection of the wireless terminal includes: the wireless terminal is powered off or in a non-network coverage area, or the offline mode is turned on, and so on. If the subscriber identity module stores a PLMN registered by the wireless terminal before the network disconnection, step 102 is performed.

Step 102: Determine whether to directly use a RAT used by the wireless terminal last time to access the RPLMN or the EPLMN. When a result of the determining is no, perform step 103.

The wireless terminal may determine, according to a parameter such as Last_RAT_Sel_Ind (Last RAT Selection Indication) in a memory or a file EFL_{RATSI} (Last RAT Selection Indication) in a SIM/USIM, whether to directly use the RAT used by the wireless terminal last time to access the RPLMN or the EPLMN when the wireless terminal is restarted or reselects a network after the network disconnection or accesses a network after the offline mode is turned off. For example, it may be set as follows: when the Last_RAT_Sel_Ind is 0, the RAT used by the wireless terminal last time is directly selected, or when the Last_RAT_Sel_Ind is 1, the RAT used by the wireless terminal last time is not directly selected. Alternatively, it is set as follows: when the EF_{LRATSI} is 0, the RAT used by the wireless terminal last time is directly selected, or when the EF_{LRATSI} is 1, the RAT used by the wireless terminal last time is not directly selected. Alternatively, the EF_{LRATSI} may also be used in combination with a file EF_{LRPLMNSI} (Last RPLMN Selection Indication) in the SIM/USIM. For example,
- if Last_RAT_Sel_Ind (or EF_{LRATSI}) = 0, and EF_{LRPLMNSI} = 0, the wireless terminal directly uses the RAT used last time to access the RPLMN or the EPLMN; or
- if Last_RAT_Sel_Ind (or EF_{LRATSI}) = 0, and EF_{LRPLMNSI} = 1, the wireless terminal does not directly use the RAT used last time to access the RPLMN or the EPLMN;
   or,
- if Last_RAT_Sel_Ind (or EF_{LRATSI}) = 1, and EF_{LRPLMNSI} = 0, the wireless terminal directly uses a RAT that was used last time and that is of a home PLMN (HPLMN) or an equivalent home PLMN (EHPLMN) to access a network, or directly uses the RAT used last time to access the RPLMN or the EPLMN; or
- if Last_RAT_Sel_Ind (or EF_{LRATSI}) = 1, and EF_{LRPLMNSI} = 1, the wireless terminal does not directly use a RAT that was used last time and that is of a home PLMN (HPLMN) or an equivalent home PLMN (EHPLMN) to access a network, or directly uses the RAT used last time to access the RPLMN or the EPLMN.

The foregoing several setting manners are merely exemplary, and are not intended to limit the present invention.

The Last_RAT_Sel_Ind (or EF_{LRATSI}) may be modified in the following several manners:
(1) A fixed value or an initial value is set according to a need of an operator. For example, it is set as follows: when Last_RAT_Sel_Ind (or EF_{LRATSI}) = 1, the RAT used last time is not directly used to access the RPLMN or the EPLMN.
(2) A value of the Last_RAT_Sel_Ind (or EF_{LRATSI}) is updated according to a message delivered by the network. For example, a system message broadcast by the network may be expanded, so that the system message carries a Last RAT Selection Indication parameter, and UE sets/updates the value of the Last_RAT_Sel_Ind (or EF_{LRATSI}) according to the parameter.
(3) The Last_RAT_Sel_Ind (or EF_{LRATSI}) is modified according to a selection of a user. For example, the subscriber identity module interacts with a user interface UI of the wireless terminal to acquire a user setting, so as to update the Last_RAT_Sel_Ind (or EF_{LRATSI}).

Certainly, the foregoing cases are merely exemplary, and do not constitute a limitation on the present invention.

When it is determined not to directly use the RAT used by the wireless terminal last time to access the RPLMN or the EPLMN, step 103 is performed.

Step 103: Select, from the information about a PLMN and a corresponding RAT, a RAT to access an RPLMN or an EPLMN that corresponds to the RAT.

The information about a PLMN and a corresponding RAT generally includes a list of a PLMN and a corresponding RAT, where a list item of the list is generally a combination of an RPLMN or an EPLMN and a RAT, for example, RPLMN+RAT1, RPLMN+RAT2, or RPLMN+RAT3. The wireless terminal selects, from the list, a RAT to access an RPLMN or an EPLMN that corresponds to the RAT.

It should be noted that the selected RAT and the RPLMN or the EPLMN that corresponds to the RAT may be the RAT used by the wireless terminal last time and the corresponding RPLMN or EPLMN.

According to Embodiment 1 of the present invention, when restarted, back to a network coverage area, and accessing a PLMN after an offline mode is turned off, a wireless terminal may choose whether to directly use a RAT used last time to access the PLMN, so that a requirement that an operator expects the wireless terminal to use a specific RAT can be satisfied, and optimum use of a network resource of the operator is implemented, thereby improving communication performance.

As shown in FIG. 2, FIG. 2 is a schematic flowchart of a wireless communication method according to Embodiment 2 of the present invention. As shown in FIG. 2, the method includes:
Step 201: Acquire information about a PLMN and a corresponding RAT, where the PLMN is an RPLMN or an EPLMN.

A subscriber identity module is in an available state when a wireless terminal is started or restored to a network coverage state from a non-network coverage state or after an offline mode is turned off. It is determined whether the subscriber identity module stores a PLMN registered by the wireless terminal before network disconnection. The network disconnection of the wireless terminal includes: the wireless terminal is powered off or in a non-network coverage area, or the offline mode is turned on, and so on. If the subscriber identity module stores a PLMN registered by the wireless terminal before the network disconnection, step 202 is performed.

Step 202: Determine whether to directly use a RAT used by the wireless terminal last time to access the RPLMN or the EPLMN.

The wireless terminal may determine, according to a parameter such as Last_RAT_Sel_Ind (Last RAT Selection Indication) in a memory or a file EFL_{RATSI} (Last RAT Selection Indication) in a SIM/USIM, whether to directly use the RAT used by the wireless terminal last time to access the RPLMN or the EPLMN when the wireless terminal is restarted or reselects a network after the network disconnection or accesses a network after the offline mode is turned off. For example, it may be set as follows: when the Last_RAT_Sel_Ind is 0, the RAT used by the wireless terminal last time is directly selected, or when the Last_RAT_Sel_Ind is 1, the RAT used by the wireless terminal last time is not directly selected. Alternatively, it is set as follows: when the EF_{LRATSI} is 0, the RAT used by the wireless terminal last time is directly selected, or when the EF_{LRATSI} is 1, the RAT used by the wireless terminal last time is not directly selected. Alternatively, the EF_{LRATSI} may also be used in combination with a file EF_{LRPLMNSI} (Last RPLMN Selection Indication) in the SIM/USIM. For example,
- if Last_RAT_Sel_Ind (or EF_{LRATSI}) = 0, and EF_{LRPLMNSI} = 0, the wireless terminal directly uses the RAT used last time to access the RPLMN or the EPLMN; or
- if Last_RAT_Sel_Ind (or EF_{LRATSI}) = 0, and EF_{LRPLMNSI} = 1, the wireless terminal does not directly use the RAT used last time to access the RPLMN or the EPLMN;
   or,
- if Last_RAT_Sel_Ind (or EF_{LRATSI}) = 1, and EF_{LRPLMNSI} = 0, the wireless terminal directly uses a RAT that was used last time and that is of a home PLMN (HPLMN) or an equivalent home PLMN (EHPLMN) to access a network, or directly uses the RAT used last time to access the RPLMN or the EPLMN; or
- if Last_RAT_Sel_Ind (or EF_{LRATSI}) = 1, and EF_{LRPLMNSI} = 1, the wireless terminal does not directly use a RAT that was used last time and that is of a home PLMN (HPLMN) or an equivalent home PLMN (EHPLMN) to access a network, or directly uses the RAT used last time to access the RPLMN or the EPLMN.

The foregoing several setting manners are merely exemplary, and are not intended to limit the present invention.

The Last_RAT_Sel_Ind (or EF_{LRATSI}) may be modified in the following several manners:
(1) A fixed value or an initial value is set according to a need of an operator. For example, it is set as follows: when Last_RAT_Sel_Ind (or EF_{LRATSI}) = 1, the RAT used last time is not directly used to access the RPLMN or the EPLMN.
(2) A value of the Last_RAT_Sel_Ind (or EF_{LRATSI}) is updated according to a message delivered by the network. For example, a system message broadcast by the network may be expanded, so that the system message carries a Last RAT Selection Indication parameter, and UE sets/updates the value of the Last_RAT_Sel_Ind (or EF_{LRATSI}) according to the parameter.
(3) The Last_RAT_Sel_Ind (or EF_{LRATSI}) is modified according to a selection of a user. For example, the subscriber identity module interacts with a user interface UI of the wireless terminal to acquire a user setting, so as to update the Last_RAT_Sel_Ind (or EF_{LRATSI}).

Certainly, the foregoing cases are merely exemplary, and do not constitute a limitation on the present invention.

When it is determined not to directly use the RAT used by the wireless terminal last time to access the RPLMN or the EPLMN, step 203 is performed.

Step 203: Select, from the information about a PLMN and a corresponding RAT, a RAT with a higher priority to access an RPLMN or an EPLMN that corresponds to the RAT.

In the information about a PLMN and a corresponding RAT, a RAT and a corresponding RPLMN or EPLMN are arranged according to a priority order or indicated by a priority.

The selecting a RAT with a higher priority to access an RPLMN or an EPLMN that corresponds to the RAT includes: performing selection one by one according to a priority level of a RAT. For example, a RAT with a highest priority is first selected to attempt to access an RPLMN or an EPLMN that corresponds to the RAT. When using the RAT with a highest priority to access the RPLMN or the EPLMN that corresponds to the RAT fails, a RAT with a second highest priority is selected to access an RPLMN or an EPLMN that corresponds to the RAT, until the wireless terminal succeeds in accessing an RPLMN or an EPLMN.

In another implementation manner, a priority of the RAT may be indicated by modifying a parameter in the memory of the wireless terminal or modifying an Access Technology Identifier parameter in the subscriber identity module. For example,
four reserved bits in a parameter are used to separately represent an evolved universal terrestrial radio access network time division multiplexing E-UTRAN TDD access technology, an evolved universal terrestrial radio access network frequency division multiplexing E-UTRAN FDD access technology, a universal terrestrial radio access network frequency division multiplexing UTRAN FDD access technology, and a universal terrestrial radio access network time division multiplexing UTRAN TDD access technology. Values of the bits corresponding to the foregoing access technologies may be set to indicate priorities of the access technologies. Generally, the E-UTRAN TDD access technology is compared with the E-UTRAN FDD access technology, and the UTRAN FDD access technology is compared with the UTRAN TDD access technology. For example, priorities of the evolved universal terrestrial radio access network time division multiplexing E-UTRAN TDD access technology and the evolved universal terrestrial radio access network frequency division multiplexing E-UTRAN FDD access technology are determined, and a RAT with a higher priority that corresponds to E-UTRAN TDD and E-UTRAN FDD is selected to access the RPLMN or the EPLMN; and/or priorities of the universal terrestrial radio access network frequency division multiplexing UTRAN FDD access technology and the universal terrestrial radio access network time division multiplexing UTRAN TDD access technology are determined, and a RAT with a higher priority that corresponds to UTRAN FDD and UTRAN TDD is selected to access the RPLMN or the EPLMN.

In another implementation manner, priority information of the RAT is acquired by using the RPLMN or the EPLMN. Specifically, the RAT priority information may be acquired according to system information broadcast in a cell of the RPLMN or the EPLMN. For example, the wireless terminal receives the system information broadcast in the cell, where system information blocks System Information Block Types 5, 6, 7, and 8, that is, SIB5, SIB6, SIB7, and SIB8 carry RAT priority information of E-UTRAN FDD/TDD, UTRAN FDD/TDD, a GERAN, and CDMA2000 respectively. The wireless terminal reads the foregoing priority information from system information broadcast in a cell A, so as to determine a RAT supported in the RPLMN/EPLMN and priority information of the RAT. The SIB5-SIB8 may not all be sent in the system information. For example, the system information includes only the SIB5-7; then, UE determines, according to the SIB5-7, that the RPLMN/EPLMN supports E-UTRAN FDD/TDD, UTRAN FDD/TDD, and the GERAN, and determines priorities of E-UTRAN FDD/TDD, UTRAN FDD/TDD, and the GERAN.

Alternatively, the wireless terminal receives a registration accept message or a location updating accept message that is sent by the RPLMN or the EPLMN, and acquires the RAT priority information according to the registration accept message or the location updating accept message. The foregoing message may be an Attach Accept, Tracking Area Update Accept, Routing Area Update Accept, and/or Location Updating Accept message. The foregoing message is expanded, so that the message carries the RAT priority information. For example, the wireless terminal sends an Attach Request (or Tracking Area Update Request, Routing Area Update Request, or Location Updating Request) message to the RPLMN, and the RPLMN returns an Attach Accept (or Tracking Area Update Accept, Routing Area Update Accept, or Location Updating Accept) message to the wireless terminal, where the Attach Accept (or Tracking Area Update Accept, Routing Area Update Accept, or Location Updating Accept) message carries an RPLMN/EPLMN RAT Combination list, or an RPLMN/EPLMN RAT list, or an RPLMN RAT list. List items (RPLMN+RAT1, EPLMN1+RAT2, ...) or (RAT1, RAT2, ...) are arranged according to a priority order or indicated by a priority. The UE reads the RPLMN/EPLMN RAT Combination list, or the RPLMN/EPLMN RAT list, or the RPLMN RAT list from the Attach Accept (or Tracking Area Update Accept, Routing Area Update Accept, and/or Location Updating Accept) message, so as to determine an access technology supported in the RPLMN/EPLMN and priority information of the access technology.

According to Embodiment 2 of the present invention, when restarted, back to a network coverage area, or accessing a PLMN after an offline mode is turned off, a wireless terminal may choose to access the PLMN by using a RAT used last time or access the PLMN according to a RAT of the PLMN that has a higher priority, so that a requirement that an operator expects the wireless terminal to use a specific RAT can be satisfied, and optimum use of a network resource of the operator is implemented. Moreover, the terminal preferentially uses an access technology with a highest priority in a network, so that the terminal can make full use of a communication capability of the terminal, improving communication performance.

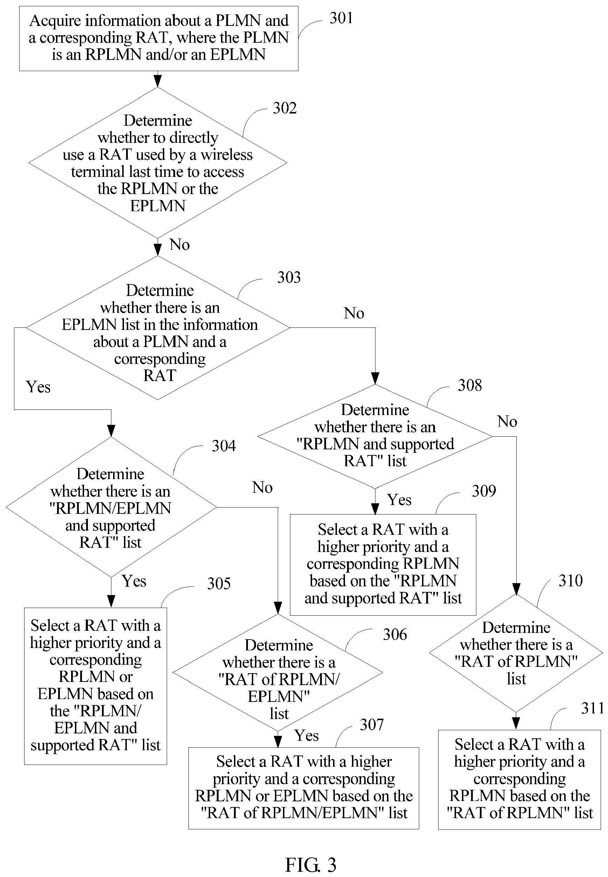

As shown in FIG. 3, FIG. 3 is a schematic flowchart of a wireless communication method according to Embodiment 3 of the present invention. As shown in FIG. 3, the method includes:
Step 301: Acquire information about a PLMN and a corresponding RAT, where the PLMN is an RPLMN or an EPLMN.

A subscriber identity module is in an available state when a wireless terminal is started or restored to a network coverage state from a non-network coverage state or after an offline mode is turned off. It is determined whether the subscriber identity module stores a PLMN registered by the wireless terminal before network disconnection. The network disconnection of the wireless terminal includes: the wireless terminal is powered off or in a non-network coverage area, or the offline mode is turned on, and so on. If the subscriber identity module stores a PLMN registered by the wireless terminal before the network disconnection, step 302 is performed.

Step 302: Determine whether to directly use a RAT used by the wireless terminal last time to access the RPLMN or the EPLMN.

The wireless terminal may determine, according to a parameter such as Last_RAT_Sel_Ind (Last RAT Selection Indication) in a memory or a file EFL_{RATSI} (Last RAT Selection Indication) in a SIM/USIM, whether to directly use the RAT used by the wireless terminal last time to access the RPLMN or the EPLMN when the wireless terminal is restarted or reselects a network after the network disconnection or accesses a network after the offline mode is turned off. For example, it may be set as follows: when the Last_RAT_Sel_Ind is 0, the RAT used by the wireless terminal last time is directly selected, or when the Last_RAT_Sel_Ind is 1, the RAT used by the wireless terminal last time is not directly selected. Alternatively, it is set as follows: when the EF_{LRATSI} is 0, the RAT used by the wireless terminal last time is directly selected, or when the EF_{LRATSI} is 1, the RAT used by the wireless terminal last time is not directly selected. Alternatively, the EF_{LRATSI} may also be used in combination with a file EF_{LRPLMNSI} (Last RPLMN Selection Indication) in the SIM/USIM. For example,
- if Last_RAT_Sel_Ind (or EF_{LRATSI}) = 0, and EF_{LRPLMNSI} = 0, the wireless terminal directly uses the RAT used last time to access the RPLMN or the EPLMN; or
- if Last_RAT_Sel_Ind (or EF_{LRATSI}) = 0, and EF_{LRPLMNSI} = 1, the wireless terminal does not directly use the RAT used last time to access the RPLMN or the EPLMN;
   or,
- if Last_RAT_Sel_Ind (or EF_{LRATSI}) = 1, and EF_{LRPLMNSI} = 0, the wireless terminal directly uses a RAT that was used last time and that is of a home PLMN (HPLMN) or an equivalent home PLMN (EHPLMN) to access a network, or directly uses the RAT used last time to access the RPLMN or the EPLMN; or
- if Last_RAT_Sel_Ind (or EF_{LRATSI}) = 1, and EF_{LRPLMNSI} = 1, the wireless terminal does not directly use a RAT that was used last time and that is of a home PLMN (HPLMN) or an equivalent home PLMN (EHPLMN) to access a network, or directly uses the RAT used last time to access the RPLMN or the EPLMN.

The foregoing several setting manners are merely exemplary, and are not intended to limit the present invention.

The Last_RAT_Sel_Ind (or EF_{LRATSI}) may be modified in the following several manners:
(1) A fixed value or an initial value is set according to a need of an operator. For example, it is set as follows: when Last_RAT_Sel_Ind (or EF_{LRATSI}) = 1, the RAT used last time is not directly used to access the RPLMN or the EPLMN.
(2) A value of the Last_RAT_Sel_Ind (or EF_{LRATSI}) is updated according to a message delivered by the network. For example, a system message broadcast by the network may be expanded, so that the system message carries a Last RAT Selection Indication parameter, and UE sets/updates the value of the Last_RAT_Sel_Ind (or EF_{LRATSI}) according to the parameter.
(3) The Last_RAT_Sel_Ind (or EF_{LRATSI}) is modified according to a selection of a user. For example, the subscriber identity module interacts with a user interface UI of the wireless terminal to acquire a user setting, so as to update the Last_RAT_Sel_Ind (or EF_{LRATSI}).

Certainly, the foregoing cases are merely exemplary, and do not constitute a limitation on the present invention.

When it is determined not to directly use the RAT used by the wireless terminal last time to access the RPLMN or the EPLMN, step 303 is performed.

Step 303: Determine whether there is an EPLMN list in a memory of the wireless terminal or in a subscriber identity module, and if there is an EPLMN list in the memory of the wireless terminal or in the subscriber identity module, perform step 304, or otherwise, perform step 308.

Step 304: Determine whether there is an "RPLMN/EPLMN and supported RAT" list in the memory of the wireless terminal or in the subscriber identity module, and if there is an "RPLMN/EPLMN and supported RAT" list in the memory of the wireless terminal or in the subscriber identity module, perform step 305, or otherwise, perform step 306.

If the RPLMN is a home PLMN HPLMN or an equivalent home PLMN EHPLMN of the wireless terminal, the wireless terminal reads a file EF_{HPLMNwAcT} (HPLMN selector with Access Technology) in the subscriber identity module, determines whether the EF_{HPLMNwAcT} includes an "HPLMN and supported RAT" list, and if the EF_{HPLMNwAcT} is empty or does not include an "HPLMN and supported RAT" list, determines whether there is an "HPLMN/EHPLMN and supported RAT" list in a memory of the UE.

If the RPLMN is not the HPLMN or the EHPLMN of the wireless terminal, the wireless terminal reads a file EF_{OPLMNwAcT} (Operator controlled PLMN selector with Access Technology, operator controlled PLMN selector with access technology) in the SIM/USIM, and determines whether the EF_{OPLMNwAcT} includes a "PLMN and supported RAT" list corresponding to the RPLMN/EPLMN. If the EF_{OPLMNwAcT} includes a "PLMN and supported RAT" list corresponding to the RPLMN/EPLMN, the wireless terminal may obtain an "RPLMN/EPLMN and supported RAT" list from the EF_{OPLMNwAcT}. If the EF_{OPLMNwAcT} is empty or does not include a "PLMN and supported RAT" list corresponding to the RPLMN/EPLMN, the wireless terminal reads a file EF_{PLMNwAcT} (User controlled PLMN selector with Access Technology, user controlled PLMN selector with access technology) in the subscriber identity module, and determines whether the EF_{PLMNwAcT} includes a "PLMN and supported RAT" list corresponding to the RPLMN/EPLMN. If the EF_{PLMNwAcT} includes a "PLMN and supported RAT" list corresponding to the RPLMN/EPLMN, the wireless terminal may obtain an "RPLMN/EPLMN and supported RAT" list from the EF_{PLMNwAcT.}

Step 305: Select a RAT with a higher priority and a corresponding RPLMN/EPLMN based on the "RPLMN/EPLMN and supported RAT" list.

A list item of the "RPLMN/EPLMN and supported RAT" list is a combination of an RPLMN/EPLMN and a RAT, for example, RPLMN+RAT1, EPLMN1+RAT2, ..., and the list item is arranged according to a priority order or indicated by a priority. For example, the list item is annotated with a priority N, where N=1, 2, 3, ..., and a smaller value of N indicates a higher priority. The wireless terminal selects, based on the "RPLMN/EPLMN and supported RAT" list, a RAT with a higher priority to access an RPLMN or an EPLMN that corresponds to the RAT.

The selecting a RAT with a higher priority to access an RPLMN or an EPLMN that corresponds to the RAT includes: performing selection one by one according to a priority level of a RAT. For example, a RAT with a highest priority is first selected to attempt to access an RPLMN or an EPLMN that corresponds to the RAT. When using the RAT with a highest priority to access the RPLMN or the EPLMN that corresponds to the RAT fails, a RAT with a second highest priority is selected to access an RPLMN or an EPLMN that corresponds to the RAT, until the wireless terminal succeeds in accessing an RPLMN or an EPLMN.

Step 306: Determine whether there is a "RAT of RPLMN/EPLMN" list in the memory of the wireless terminal or in the subscriber identity module, and if there is a "RAT of RPLMN/EPLMN" list in the memory of the wireless terminal or in the subscriber identity module, perform step 307, or otherwise, use the RAT used by the wireless terminal last time to access the RPLMN or the EPLMN that corresponds to the RAT.

Step 307: Select a RAT with a higher priority and a corresponding RPLMN/EPLMN based on the "RAT of RPLMN/EPLMN" list.

List items of the "RAT of RPLMN/EPLMN" list are RAT1, RAT2, ..., and the list items are arranged according to a priority order or indicated by a priority. For example, the list items are annotated with a priority N, where N=1, 2, 3, ..., and a smaller value of N indicates a higher priority. The wireless terminal selects, based on the "RAT of RPLMN/EPLMN" list, a RAT with a higher priority to access an RPLMN or an EPLMN that corresponds to the RAT.

The selecting a RAT with a higher priority to access an RPLMN or an EPLMN that corresponds to the RAT includes: performing selection one by one according to a priority level of a RAT. For example, a RAT with a highest priority is first selected to attempt to access an RPLMN or an EPLMN that corresponds to the RAT. When using the RAT with a highest priority to access the RPLMN or the EPLMN that corresponds to the RAT fails, a RAT with a second highest priority is selected to access an RPLMN or an EPLMN that corresponds to the RAT, until the wireless terminal succeeds in accessing an RPLMN or an EPLMN.

Step 308: Determine whether there is an "RPLMN and supported RAT" list in the memory of the wireless terminal or in the subscriber identity module, and if there is an "RPLMN and supported RAT" list in the memory of the wireless terminal or in the subscriber identity module, perform step 309, or otherwise, perform step 310.

Step 309: Select a RAT with a higher priority and a corresponding RPLMN/EPLMN based on the "RPLMN and supported RAT" list.

List items of the "RPLMN and supported RAT" list are RAT1, RAT2, ..., and the list items are arranged according to a priority order or indicated by a priority. For example, the list items are annotated with a priority N, where N=1, 2, 3, ..., and a smaller value of N indicates a higher priority. The wireless terminal selects, based on the "RPLMN and supported RAT" list, a RAT with a higher priority to access an RPLMN corresponding to the RAT.

The selecting a RAT with a higher priority to access an RPLMN corresponding to the RAT includes: performing selection one by one according to a priority level of a RAT. For example, a RAT with a highest priority is first selected to attempt to access an RPLMN corresponding to the RAT. When using the RAT with a highest priority to access the RPLMN corresponding to the RAT fails, a RAT with a second highest priority is selected to access an RPLMN corresponding to the RAT, until the wireless terminal succeeds in accessing an RPLMN.

Step 310: Determine whether there is a "RAT of RPLMN" list in the memory of the wireless terminal or in the subscriber identity module, and if there is a "RAT of RPLMN" list in the memory of the wireless terminal or in the subscriber identity module, perform step 311, or otherwise, use the RAT used by the wireless terminal last time to access the RPLMN or the EPLMN that corresponds to the RAT.

Step 311: Select a RAT with a higher priority and a corresponding RPLMN/EPLMN based on the "RAT of RPLMN" list.

List items of the "RAT of RPLMN" list are RAT1, RAT2, ..., and the list items are arranged according to a priority order or indicated by a priority. For example, the list items are annotated with a priority N, where N=1, 2, 3, ..., and a smaller value of N indicates a higher priority. The wireless terminal selects, based on the "RAT of RPLMN" list, a RAT with a higher priority to access an RPLMN corresponding to the RAT.

The selecting a RAT with a higher priority to access an RPLMN corresponding to the RAT includes: performing selection one by one according to a priority level of a RAT. For example, a RAT with a highest priority is first selected to attempt to access an RPLMN corresponding to the RAT. When using the RAT with a highest priority to access the RPLMN corresponding to the RAT fails, a RAT with a second highest priority is selected to access an RPLMN corresponding to the RAT, until the wireless terminal succeeds in accessing an RPLMN.

According to Embodiment 3 of the present invention, when restarted, back to a network coverage area, or accessing a PLMN after an offline mode is turned off, a wireless terminal may choose to access the PLMN by using a RAT used last time or access the PLMN according to a RAT of the PLMN that has a higher priority, so that a requirement that an operator expects the wireless terminal to use a specific RAT can be satisfied, and optimum use of a network resource of the operator is implemented. Moreover, the terminal preferentially uses an access technology with a highest priority in a network, so that the terminal can make full use of a communication capability of the terminal, improving communication performance.

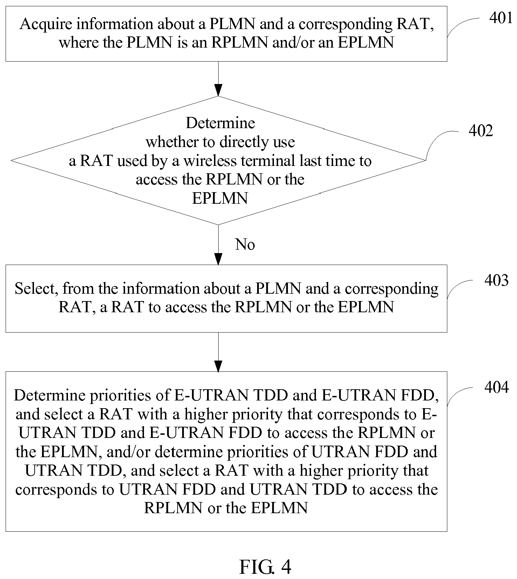

As shown in FIG. 4, FIG. 4 is a schematic flowchart of a wireless communication method according to Embodiment 4 of the present invention. As shown in FIG. 4, the method includes:

Step 401: Acquire information about a PLMN and a corresponding RAT, where the PLMN is an RPLMN or an EPLMN.

A subscriber identity module is in an available state when a wireless terminal is started or restored to a network coverage state from a non-network coverage state or after an offline mode is turned off. It is determined whether the subscriber identity module stores a PLMN registered by the wireless terminal before network disconnection. The network disconnection of the wireless terminal includes: the wireless terminal is powered off or in a non-network coverage area, or the offline mode is turned on, and so on. If the subscriber identity module stores a PLMN registered by the wireless terminal before the network disconnection, step 202 is performed.

Step 402: Determine whether to directly use a RAT used by the wireless terminal last time to access the RPLMN or the EPLMN.

The wireless terminal may determine, according to a parameter such as Last_RAT_Sel_Ind (Last RAT Selection Indication) in a memory or a file EFL_{RATSI} (Last RAT Selection Indication) in a SIM/USIM, whether to directly use the RAT used by the wireless terminal last time to access the RPLMN or the EPLMN when the wireless terminal is restarted or reselects a network after the network disconnection or accesses a network after the offline mode is turned off. For example, it may be set as follows: when the Last_RAT_Sel_Ind is 0, the RAT used by the wireless terminal last time is directly selected, or when the Last_RAT_Sel_Ind is 1, the RAT used by the wireless terminal last time is not directly selected. Alternatively, it is set as follows: when the EF_{LRATSI} is 0, the RAT used by the wireless terminal last time is directly selected, or when the EF_{LRATSI} is 1, the RAT used by the wireless terminal last time is not directly selected. Alternatively, the EF_{LRATSI} may also be used in combination with a file EF_{LRPLMNSI} (Last RPLMN Selection Indication) in the SIM/USIM. For example,
- if Last_RAT_Sel_Ind (or EF_{LRATSI}) = 0, and EF_{LRPLMNSI} = 0, the wireless terminal directly uses the RAT used last time to access the RPLMN or the EPLMN; or
- if Last_RAT_Sel_Ind (or EF_{LRATSI}) = 0, and EF_{LRPLMNSI} = 1, the wireless terminal does not directly use the RAT used last time to access the RPLMN or the EPLMN;
   or,
- if Last_RAT_Sel_Ind (or EF_{LRATSI}) = 1, and EF_{LRPLMNSI} = 0, the wireless terminal directly uses a RAT that was used last time and that is of a home PLMN (HPLMN) or an equivalent home PLMN (EHPLMN) to access a network, or directly uses the RAT used last time to access the RPLMN or the EPLMN; or
- if Last_RAT_Sel_Ind (or EF_{LRATSI}) = 1, and EF_{LRPLMNSI} = 1, the wireless terminal does not directly use a RAT that was used last time and that is of a home PLMN (HPLMN) or an equivalent home PLMN (EHPLMN) to access a network, or directly uses the RAT used last time to access the RPLMN or the EPLMN.

The foregoing several setting manners are merely exemplary, and are not intended to limit the present invention.

The Last_RAT_Sel_Ind (or EF_{LRATSI}) may be modified in the following several manners:
(1) A fixed value or an initial value is set according to a need of an operator. For example, it is set as follows: when Last_RAT_Sel_Ind (or EF_{LRATSI}) = 1, the RAT used last time is not directly used to access the RPLMN or the EPLMN.
(2) A value of the Last_RAT_Sel_Ind (or EF_{LRATSI}) is updated according to a message delivered by the network. For example, a system message broadcast by the network may be expanded, so that the system message carries a Last RAT Selection Indication parameter, and UE sets/updates the value of the Last_RAT_Sel_Ind (or EF_{LRATSI}) according to the parameter.
(3) The Last_RAT_Sel_Ind (or EF_{LRATSI}) is modified according to a selection of a user. For example, the subscriber identity module interacts with a user interface UI of the wireless terminal to acquire a user setting, so as to update the Last_RAT_Sel_Ind (or EF_{LRATSI}).

Certainly, the foregoing cases are merely exemplary, and do not constitute a limitation on the present invention.

When it is determined not to directly use the RAT used by the wireless terminal last time to access the RPLMN or the EPLMN, step 403 is performed.

Step 403: Select, from the information about a PLMN and a corresponding RAT, a RAT to access an RPLMN or an EPLMN that corresponds to the RAT.

Step 404: Determine priorities of an evolved universal terrestrial radio access network time division multiplexing E-UTRAN TDD access technology and an evolved universal terrestrial radio access network frequency division multiplexing E-UTRAN FDD access technology, and select a RAT with a higher priority that corresponds to E-UTRAN TDD and E-UTRAN FDD to access the RPLMN or the EPLMN; and/or determine priorities of a universal terrestrial radio access network frequency division multiplexing UTRAN FDD access technology and a universal terrestrial radio access network time division multiplexing UTRAN TDD access technology, and select a RAT with a higher priority that corresponds to UTRAN FDD and UTRAN TDD to access the RPLMN or the EPLMN.

A priority of the RAT may be indicated by modifying a parameter in the memory of the wireless terminal or modifying an Access Technology Identifier parameter in the subscriber identity module. For example,
four reserved bits in a parameter are used to separately represent the evolved universal terrestrial radio access network time division multiplexing E-UTRAN TDD access technology, the evolved universal terrestrial radio access network frequency division multiplexing E-UTRAN FDD access technology, the universal terrestrial radio access network frequency division multiplexing UTRAN FDD access technology, and the universal terrestrial radio access network time division multiplexing UTRAN TDD access technology. Values of the bits corresponding to the foregoing access technologies may be set to indicate priorities of the access technologies. Generally, the E-UTRAN TDD access technology is compared with the E-UTRAN FDD access technology, and the UTRAN FDD access technology is compared with the UTRAN TDD access technology. For example, the priorities of the evolved universal terrestrial radio access network time division multiplexing E-UTRAN TDD access technology and the evolved universal terrestrial radio access network frequency division multiplexing E-UTRAN FDD access technology are determined, and the RAT with a higher priority that corresponds to E-UTRAN TDD and E-UTRAN FDD is selected to access the RPLMN or the EPLMN; and/or the priorities of the universal terrestrial radio access network frequency division multiplexing UTRAN FDD access technology and the universal terrestrial radio access network time division multiplexing UTRAN TDD access technology are determined, and the RAT with a higher priority that corresponds to UTRAN FDD and UTRAN TDD is selected to access the RPLMN or the EPLMN.

According to Embodiment 4 of the present invention, when restarted, back to a network coverage area, or accessing a PLMN after an offline mode is turned off, a wireless terminal may choose to access the PLMN by using a RAT used last time or access the PLMN according to a RAT of the PLMN that has a higher priority, so that a requirement that an operator expects the wireless terminal to use a specific RAT can be satisfied, and optimum use of a network resource of the operator is implemented. Moreover, the terminal preferentially uses an access technology with a highest priority in a network, so that the terminal can make full use of a communication capability of the terminal, improving communication performance.

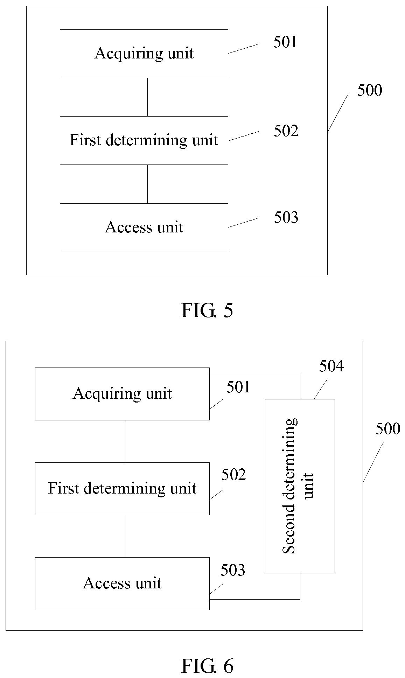

As shown in FIG. 5, FIG. 5 is a schematic structural diagram of a processor according to Embodiment 5 of the present invention. The processor 500 includes an acquiring unit 501, a first determining unit 502, and an access unit 503. The acquiring unit 501 is configured to acquire information about a PLMN of a wireless terminal and a corresponding RAT, where the PLMN is a registered public land mobile network RPLMN and/or an equivalent public land mobile network EPLMN; the first determining unit 502 is configured to determine whether to directly use a RAT used last time to access the PLMN that is the RPLMN and/or the EPLMN; and the access unit 503 is configured to: if the determining unit determines not to directly use the RAT used by the wireless terminal last time to access the RPLMN or the EPLMN, select, from the information about a PLMN and a corresponding RAT, a RAT to access an RPLMN or an EPLMN that corresponds to the RAT.

Optionally, the access unit 503 selects, from the information about a PLMN and a corresponding RAT, a RAT with a higher priority to access an RPLMN or an EPLMN that corresponds to the RAT.

Optionally, the information that is about a PLMN and a corresponding RAT and that is acquired by the acquiring unit 503 includes a list of a PLMN and a corresponding RAT, a list item of the list includes a combination of a registered public land mobile network RPLMN and a RAT or a combination of an equivalent public land mobile network EPLMN and a RAT, and the combination of an RPLMN and a RAT or the combination of an EPLMN and a RAT is arranged according to a priority order or indicated by a priority.

Optionally, the acquiring unit 501 acquires the information about a PLMN and a corresponding RAT from a memory of the wireless terminal or from a file of an operator controlled PLMN selector with access technology in a subscriber identity module.

Optionally, the acquiring unit 501 acquires the information about a PLMN and a corresponding RAT from a memory of the wireless terminal or from a file of a user controlled PLMN selector with access technology in a subscriber identity module.

Optionally, as shown in FIG. 6, the processor further includes a second determining unit 504, and the second determining unit 504 is configured to determine whether the PLMN is a home PLMN HPLMN or an equivalent home PLMN EHPLMN of the wireless terminal; where
if the PLMN is the HPLMN or the EHPLMN of the wireless terminal, a list item of the information about a PLMN and a corresponding RAT is a combination of an HPLMN and a RAT or a combination of an EHPLMN and a RAT, and the information about a PLMN and a corresponding RAT is acquired by the acquiring unit 501 from a memory of the wireless terminal or from a file of a home public land mobile network selector with RAT in a subscriber identity module; or
if the PLMN is not the HPLMN or the EHPLMN of the wireless terminal, it is determined whether an operator controlled PLMN selector with access technology includes a RAT list of an RPLMN or an EPLMN, where if the operator controlled PLMN selector with access technology includes a RAT list of an RPLMN or an EPLMN, the acquiring unit acquires information that is about a PLMN and a corresponding RAT and that is of an RPLMN or an EPLMN from a memory of the wireless terminal or from a file of an operator controlled PLMN selector with access technology in a subscriber identity module, or if the operator controlled PLMN selector with access technology does not include a RAT list of an RPLMN or an EPLMN, the acquiring unit 501 acquires information that is about a PLMN and a corresponding RAT and that is of an RPLMN or an EPLMN from a memory of the wireless terminal or from a file of a user controlled PLMN selector with access technology in a subscriber identity module.

Optionally, that the access unit 503 selects, from the information about a PLMN and a corresponding RAT, a RAT with a higher priority to access the RPLMN or the EPLMN specifically includes:
determining priorities of an evolved universal terrestrial radio access network time division multiplexing E-UTRAN TDD access technology and an evolved universal terrestrial radio access network frequency division multiplexing E-UTRAN FDD access technology, and selecting a RAT with a higher priority that corresponds to E-UTRAN TDD and E-UTRAN FDD to access the RPLMN or the EPLMN; and/or
determining priorities of a universal terrestrial radio access network frequency division multiplexing UTRAN FDD access technology and a universal terrestrial radio access network time division multiplexing UTRAN TDD access technology, and selecting a RAT with a higher priority that corresponds to UTRAN FDD and UTRAN TDD to access the RPLMN or the EPLMN.

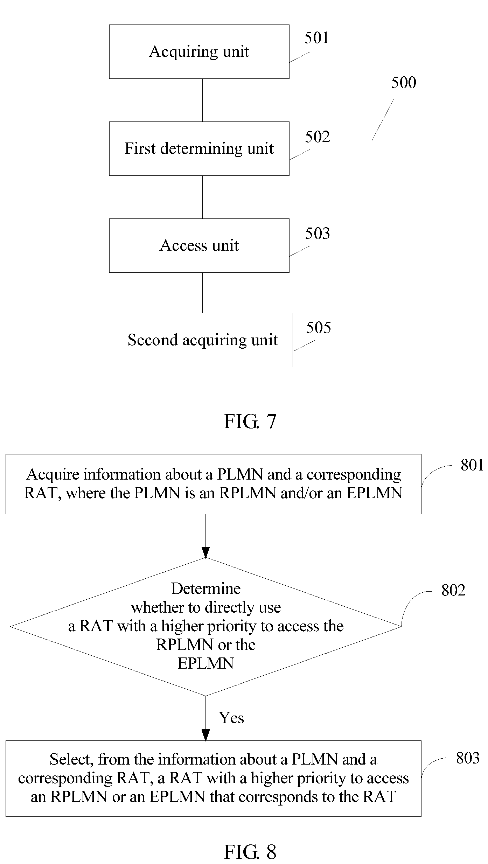

Optionally, as shown in FIG. 7, the processor further includes a second acquiring unit 505, the second acquiring unit 505 is configured to acquire RAT priority information by using the RPLMN or the EPLMN, and the access unit selects, according to the RAT priority information that is acquired by the second acquiring unit 505 by using the PLMN, the RAT with a higher priority to access the RPLMN or the EPLMN that corresponds to the RAT.

Optionally, that the second acquiring unit 505 acquires RAT priority information by using the RPLMN or the EPLMN is specifically: the second acquiring unit 505 acquires the RAT priority information according to system information broadcast in a cell of the RPLMN or the EPLMN.

Optionally, that the second acquiring unit 505 acquires RAT priority information by using the RPLMN or the EPLMN is specifically: the second acquiring unit 505 acquires the RAT priority information according to registration accept information or location updating accept information that is sent by the RPLMN or the EPLMN.

Optionally, that the first determining unit 502 determines whether to directly use a RAT used by the wireless terminal last time to access the PLMN is specifically:
the first determining unit 502 determines, according to a first parameter in the memory of the wireless terminal or a second parameter in the subscriber identity module, whether to directly use the RAT used by the wireless terminal last time to access the RPLMN or the EPLMN.

An embodiment of the present invention further provides a wireless terminal, where the wireless terminal includes the processor shown in the foregoing embodiment.

The processor or the wireless terminal shown in the foregoing embodiment is configured to implement the method in the foregoing embodiment shown in FIG. 1, FIG. 2, FIG. 3, or FIG. 4. For details about a working procedure and principle of the wireless terminal and an implemented effect, reference may be made to the embodiment shown in FIG. 1, FIG. 2, FIG. 3, or FIG. 4.

According to the processor and the wireless terminal that are provided in the embodiments of the present invention, when restarted, back to a network coverage area, or accessing a PLMN after an offline mode is turned off, the wireless terminal may choose to access the PLMN by using a RAT used last time or access the PLMN according to a RAT of the PLMN that has a higher priority, so that a requirement that an operator expects the wireless terminal to use a specific RAT can be satisfied, and optimum use of a network resource of the operator is implemented. Moreover, the terminal preferentially uses an access technology with a highest priority in a network, so that the terminal can make full use of a communication capability of the terminal, improving communication performance.

As shown in FIG. 8, FIG. 8 is a schematic flowchart of a wireless communication method according to Embodiment 8 of the present invention. As shown in FIG. 8, the method includes:
Step 801: Acquire information about a PLMN and a corresponding RAT, where the PLMN is an RPLMN or an EPLMN.

A subscriber identity module is in an available state when a wireless terminal is started or restored to a network coverage state from a non-network coverage state or after an offline mode is turned off. It is determined whether the subscriber identity module stores a PLMN registered by the wireless terminal before network disconnection. The network disconnection of the wireless terminal includes: the wireless terminal is powered off or in a non-network coverage area, or the offline mode is turned on, and so on. If the subscriber identity module stores a PLMN registered by the wireless terminal before the network disconnection, step 202 is performed.

Step 802: Determine whether to directly use a RAT with a higher priority to access the RPLMN or the EPLMN.

The wireless terminal may determine, according to a parameter such as Last_RAT_Sel_Ind (Last RAT Selection Indication) in a memory or a file EFL_{RATSI} (Last RAT Selection Indication) in a SIM/USIM, whether to directly use the RAT with a higher priority to access the RPLMN or the EPLMN when the wireless terminal is restarted or reselects a network after the network disconnection or accesses a network after the offline mode is turned off. For example, it may be set as follows: when the Last_RAT_Sel_Ind is 1, the RAT with a higher priority is directly selected, or when the Last_RAT_Sel_Ind is 1, the RAT with a higher priority is not directly selected. Alternatively, it is set as follows: when the EF_{LRATSI} is 0, the RAT with a higher priority is directly selected, or when the EF_{LRATSI} is 1, the RAT with a higher priority is not directly selected. Alternatively, the EF_{LRATSI} may also be used in combination with a file EF_{LRPLMNSI} (Last RPLMN Selection Indication) in the SIM/USIM. For example,
- if Last_RAT_Sel_Ind (or EF_{LRATSI}) = 0, and EF_{LRPLMNSI} = 0, the wireless terminal does not directly use the RAT with a higher priority to access the RPLMN or the EPLMN; or
- if Last_RAT_Sel_Ind (or EF_{LRATSI}) = 0, and EF_{LRPLMNSI} = 1, the wireless terminal directly uses the RAT with a higher priority to access the RPLMN or the EPLMN;
   or,
- if Last_RAT_Sel_Ind (or EF_{LRATSI}) = 1, and EF_{LRPLMNSI} = 0, the wireless terminal does not directly use a RAT that is of a home PLMN (HPLMN) or an equivalent home PLMN (EHPLMN) and that has a higher priority to access a network; or
- if Last_RAT_Sel_Ind (or EF_{LRATSI}) = 1, and EF_{LRPLMNSI} = 1, the wireless terminal directly uses a RAT that is of a home PLMN (HPLMN) or an equivalent home PLMN (EHPLMN) and that has a higher priority to access a network.

The foregoing several setting manners are merely exemplary, and are not intended to limit the present invention.

The Last_RAT_Sel_Ind (or EF_{LRATSI}) may be modified in the following several manners:
(1) A fixed value or an initial value is set according to a need of an operator. For example, it is set as follows: when Last_RAT_Sel_Ind (or EF_{LRATSI}) = 1, the RAT used last time is not directly used to access the RPLMN or the EPLMN.
(2) A value of the Last_RAT_Sel_Ind (or EF_{LRATSI}) is updated according to a message delivered by the network. For example, a system message broadcast by the network may be expanded, so that the system message carries a Last RAT Selection Indication parameter, and UE sets/updates the value of the Last_RAT_Sel_Ind (or EF_{LRATSI}) according to the parameter.
(3) The Last_RAT_Sel_Ind (or EF_{LRATSI}) is modified according to a selection of a user. For example, the subscriber identity module interacts with a user interface UI of the wireless terminal to acquire a user setting, so as to update the Last_RAT_Sel_Ind (or EF_{LRATSI}).

Certainly, the foregoing cases are merely exemplary, and do not constitute a limitation on the present invention.

When it is determined not to directly use the RAT used by the wireless terminal last time to access the RPLMN or the EPLMN, step 803 is performed.

Step 803: Select, from the information about a PLMN and a corresponding RAT, a RAT with a higher priority to access an RPLMN or an EPLMN that corresponds to the RAT.

In the information about a PLMN and a corresponding RAT, a RAT and a corresponding RPLMN or EPLMN are arranged according to a priority order or indicated by a priority.

The selecting a RAT with a higher priority to access an RPLMN or an EPLMN that corresponds to the RAT includes: performing selection one by one according to a priority level of a RAT. For example, a RAT with a highest priority is first selected to attempt to access an RPLMN or an EPLMN that corresponds to the RAT. When using the RAT with a highest priority to access the RPLMN or the EPLMN that corresponds to the RAT fails, a RAT with a second highest priority is selected to access an RPLMN or an EPLMN that corresponds to the RAT, until the wireless terminal succeeds in accessing an RPLMN or an EPLMN.

In another implementation manner, a priority of the RAT may be indicated by modifying a parameter in the memory of the wireless terminal or modifying an Access Technology Identifier parameter in the subscriber identity module. For example,
four reserved bits in a parameter are used to separately represent an evolved universal terrestrial radio access network time division multiplexing E-UTRAN TDD access technology, an evolved universal terrestrial radio access network frequency division multiplexing E-UTRAN FDD access technology, a universal terrestrial radio access network frequency division multiplexing UTRAN FDD access technology, and a universal terrestrial radio access network time division multiplexing UTRAN TDD access technology. Values of the bits corresponding to the foregoing access technologies may be set to indicate priorities of the access technologies. Generally, the E-UTRAN TDD access technology is compared with the E-UTRAN FDD access technology, and the UTRAN FDD access technology is compared with the UTRAN TDD access technology. For example, priorities of the evolved universal terrestrial radio access network time division multiplexing E-UTRAN TDD access technology and the evolved universal terrestrial radio access network frequency division multiplexing E-UTRAN FDD access technology are determined, and a RAT with a higher priority that corresponds to E-UTRAN TDD and E-UTRAN FDD is selected to access the RPLMN or the EPLMN; and/or priorities of the universal terrestrial radio access network frequency division multiplexing UTRAN FDD access technology and the universal terrestrial radio access network time division multiplexing UTRAN TDD access technology are determined, and a RAT with a higher priority that corresponds to UTRAN FDD and UTRAN TDD is selected to access the RPLMN or the EPLMN.

In another implementation manner, priority information of the RAT is acquired by using the RPLMN or the EPLMN. Specifically, the RAT priority information may be acquired according to system information broadcast in a cell of the RPLMN or the EPLMN. For example, the wireless terminal receives the system information broadcast in the cell, where system information blocks System Information Block Types 5, 6, 7, and 8, that is, SIB5, SIB6, SIB7, and SIB8 carry RAT priority information of E-UTRAN FDD/TDD, UTRAN FDD/TDD, a GERAN, and CDMA2000 respectively. The wireless terminal reads the foregoing priority information from system information broadcast in a cell A, so as to determine a RAT supported in the RPLMN/EPLMN and priority information of the RAT. The SIB5-SIB8 may not all be sent in the system information. For example, the system information includes only the SIB5-7; then, UE determines, according to the SIB5-7, that the RPLMN/EPLMN supports E-UTRAN FDD/TDD, UTRAN FDD/TDD, and the GERAN, and determines priorities of E-UTRAN FDD/TDD, UTRAN FDD/TDD, and the GERAN.

Alternatively, the wireless terminal receives a registration accept message or a location updating accept message that is sent by the RPLMN or the EPLMN, and acquires the RAT priority information according to the registration accept message or the location updating accept message. The foregoing message may be an Attach Accept, Tracking Area Update Accept, Routing Area Update Accept, and/or Location Updating Accept message. The foregoing message is expanded, so that the message carries the RAT priority information. For example, the wireless terminal sends an Attach Request (or Tracking Area Update Request, Routing Area Update Request, or Location Updating Request) message to the RPLMN, and the RPLMN returns an Attach Accept (or Tracking Area Update Accept, Routing Area Update Accept, or Location Updating Accept) message to the wireless terminal, where the Attach Accept (or Tracking Area Update Accept, Routing Area Update Accept, or Location Updating Accept) message carries an RPLMN/EPLMN RAT Combination list, or an RPLMN/EPLMN RAT list, or an RPLMN RAT list. List items (RPLMN+RAT1, EPLMN1+RAT2, ...) or (RAT1, RAT2, ...) are arranged according to a priority order or indicated by a priority. The UE reads the RPLMN/EPLMN RAT Combination list, or the RPLMN/EPLMN RAT list, or the RPLMN RAT list from the Attach Accept (or Tracking Area Update Accept, Routing Area Update Accept, and/or Location Updating Accept) message, so as to determine an access technology supported in the RPLMN/EPLMN and priority information of the access technology.

According to Embodiment 8 of the present invention, when restarted, back to a network coverage area, or accessing a PLMN after an offline mode is turned off, a wireless terminal may choose to access the PLMN by using a RAT used last time or access the PLMN according to a RAT of the PLMN that has a higher priority, so that a requirement that an operator expects the wireless terminal to use a specific RAT can be satisfied, and optimum use of a network resource of the operator is implemented. Moreover, the terminal preferentially uses an access technology with a highest priority in a network, so that the terminal can make full use of a communication capability of the terminal, improving communication performance.

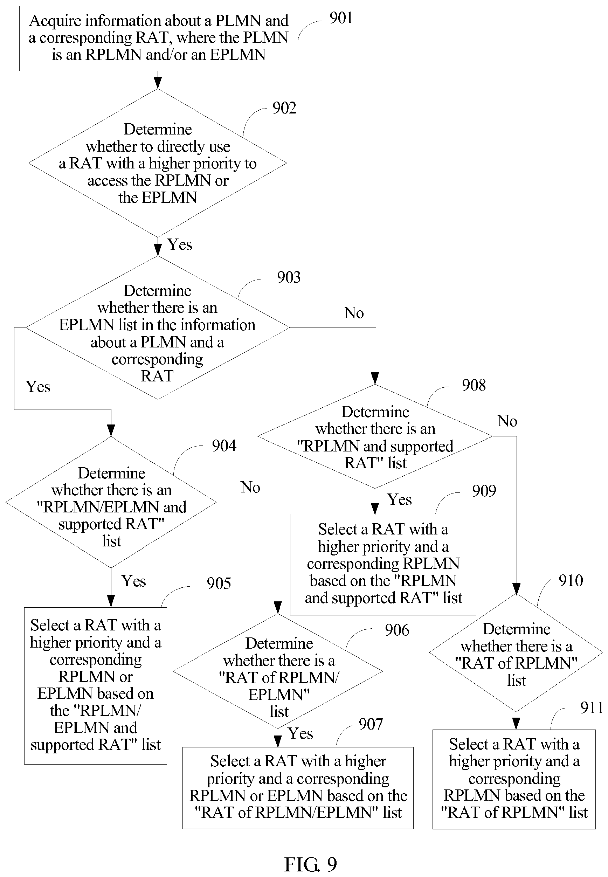

As shown in FIG. 9, FIG. 9 is a schematic flowchart of a wireless communication method according to Embodiment 3 of the present invention. As shown in FIG. 9, the method includes:
Step 901: Acquire information about a PLMN and a corresponding RAT, where the PLMN is an RPLMN or an EPLMN.

A subscriber identity module is in an available state when a wireless terminal is started or restored to a network coverage state from a non-network coverage state or after an offline mode is turned off. It is determined whether the subscriber identity module stores a PLMN registered by the wireless terminal before network disconnection. The network disconnection of the wireless terminal includes: the wireless terminal is powered off or in a non-network coverage area, or the offline mode is turned on, and so on. If the subscriber identity module stores a PLMN registered by the wireless terminal before the network disconnection, step 902 is performed.

Step 902: Determine whether to directly use a RAT with a higher priority to access the RPLMN or the EPLMN.

The wireless terminal may determine, according to a parameter such as Last_RAT_Sel_Ind (Last RAT Selection Indication) in a memory or a file EFL_{RATSI} (Last RAT Selection Indication) in a SIM/USIM, whether to directly use the RAT used by the wireless terminal last time to access the RPLMN or the EPLMN when the wireless terminal is restarted or reselects a network after the network disconnection or accesses a network after the offline mode is turned off. For example, it may be set as follows: when the Last_RAT_Sel_Ind is 0, the RAT used by the wireless terminal last time is directly selected, or when the Last_RAT_Sel_Ind is 1, the RAT used by the wireless terminal last time is not directly selected. Alternatively, it is set as follows: when the EF_{LRATSI} is 0, the RAT used by the wireless terminal last time is directly selected, or when the EF_{LRATSI} is 1, the RAT used by the wireless terminal last time is not directly selected. Alternatively, the EF_{LRATSI} may also be used in combination with a file EF_{LRPLMNSI} (Last RPLMN Selection Indication) in the SIM/USIM. For example,
- if Last_RAT_Sel_Ind (or EF_{LRATSI}) = 0, and EF_{LRPLMNSI} = 0, the wireless terminal does not directly use the RAT with a higher priority to access the RPLMN or the EPLMN; or
- if Last_RAT_Sel_Ind (or EF_{LRATSI}) = 0, and EF_{LRPLMNSI} = 1, the wireless terminal directly uses the RAT with a higher priority to access the RPLMN or the EPLMN;
   or,
- if Last_RAT_Sel_Ind (or EF_{LRATSI}) = 1, and EF_{LRPLMNSI} = 0, the wireless terminal does not directly use a RAT that is of a home PLMN (HPLMN) or an equivalent home PLMN (EHPLMN) and that has a higher priority to access a network; or
- if Last_RAT_Sel_Ind (or EF_{LRATSI}) = 1, and EF_{LRPLMNSI} = 1, the wireless terminal directly uses a RAT that is of a home PLMN (HPLMN) or an equivalent home PLMN (EHPLMN) and that has a higher priority to access a network.

The foregoing several setting manners are merely exemplary, and are not intended to limit the present invention.

The Last_RAT_Sel_Ind (or EF_{LRATSI}) may be modified in the following several manners:
(1) A fixed value or an initial value is set according to a need of an operator. For example, it is set as follows: when Last_RAT_Sel_Ind (or EF_{LRATSI}) = 1, the RAT used last time is not directly used to access the RPLMN or the EPLMN.
(2) A value of the Last_RAT_Sel_Ind (or EF_{LRATSI}) is updated according to a message delivered by the network. For example, a system message broadcast by the network may be expanded, so that the system message carries a Last RAT Selection Indication parameter, and UE sets/updates the value of the Last_RAT_Sel_Ind (or EF_{LRATSI}) according to the parameter.
(3) The Last_RAT_Sel_Ind (or EF_{LRATSI}) is modified according to a selection of a user. For example, the subscriber identity module interacts with a user interface UI of the wireless terminal to acquire a user setting, so as to update the Last_RAT_Sel_Ind (or EF_{LRATSI}).

Certainly, the foregoing cases are merely exemplary, and do not constitute a limitation on the present invention.

When it is determined to directly use the RAT with a higher priority to access the RPLMN or the EPLMN, step 903 is performed.

Step 903: Determine whether there is an EPLMN list in a memory of a wireless terminal or in a subscriber identity module, and if there is an EPLMN list in the memory of the wireless terminal or in the subscriber identity module, perform step 904, or otherwise, perform step 908.

Step 904: Determine whether there is an "RPLMN/EPLMN and supported RAT" list in the memory of the wireless terminal or in the subscriber identity module, and if there is an "RPLMN/EPLMN and supported RAT" list in the memory of the wireless terminal or in the subscriber identity module, perform step 905, or otherwise, perform step 906.

If the RPLMN is a home PLMN HPLMN or an equivalent home PLMN EHPLMN of the wireless terminal, the wireless terminal reads a file EF_{HPLMNwAcT} (HPLMN selector with Access Technology) in the subscriber identity module, determines whether the EF_{HPLMNwAcT} includes an "HPLMN and supported RAT" list, and if the EF_{HPLMNwAcT} is empty or does not include an "HPLMN and supported RAT" list, determines whether there is an "HPLMN/EHPLMN and supported RAT" list in a memory of the UE.

If the RPLMN is not the HPLMN or the EHPLMN of the wireless terminal, the wireless terminal reads a file EF_{OPLMNwAcT} (Operator controlled PLMN selector with Access Technology, operator controlled PLMN selector with access technology) in the SIM/USIM, and determines whether the EF_{OPLMNwAcT} includes a "PLMN and supported RAT" list corresponding to the RPLMN/EPLMN. If the EF_{OPLMNwAcT} includes a "PLMN and supported RAT" list corresponding to the RPLMN/EPLMN, the wireless terminal may obtain an "RPLMN/EPLMN and supported RAT" list from the EF_{OPLMNwAcT}. If the EF_{OPLMNwAcT} is empty or does not include a "PLMN and supported RAT" list corresponding to the RPLMN/EPLMN, the wireless terminal reads a file EF_{PLMNwAcT} (User controlled PLMN selector with Access Technology, user controlled PLMN selector with access technology) in the subscriber identity module, and determines whether the EF_{PLMNwAcT} includes a "PLMN and supported RAT" list corresponding to the RPLMN/EPLMN. If the EF_{PLMNwAcT} includes a "PLMN and supported RAT" list corresponding to the RPLMN/EPLMN, the wireless terminal may obtain an "RPLMN/EPLMN and supported RAT" list from the EF_{PLMNwAcT}.

Step 905: Select a RAT with a higher priority and a corresponding RPLMN/EPLMN based on the "RPLMN/EPLMN and supported RAT" list.

A list item of the "RPLMN/EPLMN and supported RAT" list is a combination of an RPLMN/EPLMN and a RAT, for example, RPLMN+RAT1, EPLMN1+RAT2, ..., and the list item is arranged according to a priority order or indicated by a priority. For example, the list item is annotated with a priority N, where N=1, 2, 3, ..., and a smaller value of N indicates a higher priority. The wireless terminal selects, based on the "RPLMN/EPLMN and supported RAT" list, a RAT with a higher priority to access an RPLMN or an EPLMN that corresponds to the RAT.

The selecting a RAT with a higher priority to access an RPLMN or an EPLMN that corresponds to the RAT includes: performing selection one by one according to a priority level of a RAT. For example, a RAT with a highest priority is first selected to attempt to access an RPLMN or an EPLMN that corresponds to the RAT. When using the RAT with a highest priority to access the RPLMN or the EPLMN that corresponds to the RAT fails, a RAT with a second highest priority is selected to access an RPLMN or an EPLMN that corresponds to the RAT, until the wireless terminal succeeds in accessing an RPLMN or an EPLMN.

Step 906: Determine whether there is a "RAT of RPLMN/EPLMN" list in the memory of the wireless terminal or in the subscriber identity module, and if there is a "RAT of RPLMN/EPLMN" list in the memory of the wireless terminal or in the subscriber identity module, perform step 907, or otherwise, use a RAT used by the wireless terminal last time to access an RPLMN or an EPLMN that corresponds to the RAT.

Step 907: Select a RAT with a higher priority and a corresponding RPLMN/EPLMN based on the "RAT of RPLMN/EPLMN" list.

List items of the "RAT of RPLMN/EPLMN" list are RAT1, RAT2, ..., and the list items are arranged according to a priority order or indicated by a priority. For example, the list items are annotated with a priority N, where N=1, 2, 3, ..., and a smaller value of N indicates a higher priority. The wireless terminal selects, based on the "RAT of RPLMN/EPLMN" list, a RAT with a higher priority to access an RPLMN or an EPLMN that corresponds to the RAT.

The selecting a RAT with a higher priority to access an RPLMN or an EPLMN that corresponds to the RAT includes: performing selection one by one according to a priority level of a RAT. For example, a RAT with a highest priority is first selected to attempt to access an RPLMN or an EPLMN that corresponds to the RAT. When using the RAT with a highest priority to access the RPLMN or the EPLMN that corresponds to the RAT fails, a RAT with a second highest priority is selected to access an RPLMN or an EPLMN that corresponds to the RAT, until the wireless terminal succeeds in accessing an RPLMN or an EPLMN.

Step 908: Determine whether there is an "RPLMN and supported RAT" list in the memory of the wireless terminal or in the subscriber identity module, and if there is an "RPLMN and supported RAT" list in the memory of the wireless terminal or in the subscriber identity module, perform step 909, or otherwise, perform step 910.

Step 909: Select a RAT with a higher priority and a corresponding RPLMN/EPLMN based on the "RPLMN and supported RAT" list.

List items of the "RPLMN and supported RAT" list are RAT1, RAT2, ..., and the list items are arranged according to a priority order or indicated by a priority. For example, the list items are annotated with a priority N, where N=1, 2, 3, ..., and a smaller value of N indicates a higher priority. The wireless terminal selects, based on the "RPLMN and supported RAT" list, a RAT with a higher priority to access an RPLMN corresponding to the RAT.

The selecting a RAT with a higher priority to access an RPLMN corresponding to the RAT includes: performing selection one by one according to a priority level of a RAT. For example, a RAT with a highest priority is first selected to attempt to access an RPLMN corresponding to the RAT. When using the RAT with a highest priority to access the RPLMN corresponding to the RAT fails, a RAT with a second highest priority is selected to access an RPLMN corresponding to the RAT, until the wireless terminal succeeds in accessing an RPLMN.

Step 910: Determine whether there is a "RAT of RPLMN" list in the memory of the wireless terminal or in the subscriber identity module, and if there is a "RAT of RPLMN" list in the memory of the wireless terminal or in the subscriber identity module, perform step 911, or otherwise, use the RAT used by the wireless terminal last time to access the RPLMN or the EPLMN that corresponds to the RAT.

Step 911: Select a RAT with a higher priority and a corresponding RPLMN/EPLMN based on the "RAT of RPLMN" list.

List items of the "RAT of RPLMN" list are RAT1, RAT2, ..., and the list items are arranged according to a priority order or indicated by a priority. For example, the list items are annotated with a priority N, where N=1, 2, 3, ..., and a smaller value of N indicates a higher priority. The wireless terminal selects, based on the "RAT of RPLMN" list, a RAT with a higher priority to access an RPLMN corresponding to the RAT.

The selecting a RAT with a higher priority to access an RPLMN corresponding to the RAT includes: performing selection one by one according to a priority level of a RAT. For example, a RAT with a highest priority is first selected to attempt to access an RPLMN corresponding to the RAT. When using the RAT with a highest priority to access the RPLMN corresponding to the RAT fails, a RAT with a second highest priority is selected to access an RPLMN corresponding to the RAT, until the wireless terminal succeeds in accessing an RPLMN.

According to Embodiment 9 of the present invention, when restarted, back to a network coverage area, or accessing a PLMN after an offline mode is turned off, a wireless terminal may choose to access the PLMN by using a RAT used last time or access the PLMN according to a RAT of the PLMN that has a higher priority, so that a requirement that an operator expects the wireless terminal to use a specific RAT can be satisfied, and optimum use of a network resource of the operator is implemented. Moreover, the terminal preferentially uses an access technology with a highest priority in a network, so that the terminal can make full use of a communication capability of the terminal, improving communication performance.

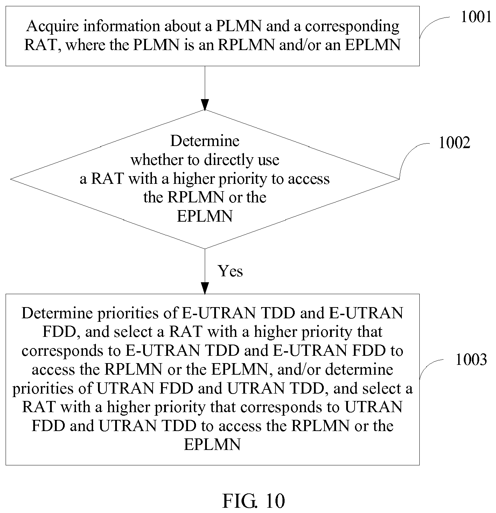

As shown in FIG. 10, FIG. 10 is a schematic flowchart of a wireless communication method according to Embodiment 10 of the present invention. As shown in FIG. 10, the method includes:
Step 1001: Acquire information about a PLMN and a corresponding RAT, where the PLMN is an RPLMN or an EPLMN.

A subscriber identity module is in an available state when a wireless terminal is started or restored to a network coverage state from a non-network coverage state or after an offline mode is turned off. It is determined whether the subscriber identity module stores a PLMN registered by the wireless terminal before network disconnection. The network disconnection of the wireless terminal includes: the wireless terminal is powered off or in a non-network coverage area, or the offline mode is turned on, and so on. If the subscriber identity module stores a PLMN registered by the wireless terminal before the network disconnection, step 1002 is performed.

Step 1002: Determine whether to directly use a RAT with a higher priority to access the RPLMN or the EPLMN.

The wireless terminal may determine, according to a parameter such as Last_RAT_Sel_Ind (Last RAT Selection Indication) in a memory or a file EFL_{RATSI} (Last RAT Selection Indication) in a SIM/USIM, whether to directly use the RAT with a higher priority to access the RPLMN or the EPLMN when the wireless terminal is restarted or reselects a network after the network disconnection or accesses a network after the offline mode is turned off. For example, it may be set as follows: when the Last_RAT_Sel_Ind is 0, the RAT with a higher priority is not directly selected, or when the Last_RAT_Sel_Ind is 1, the RAT with a higher priority is directly selected. Alternatively, it is set as follows: when the EF_{LRATSI} is 0, the RAT with a higher priority is not directly selected, or when the EF_{LRATSI} is 1, the RAT with a higher priority is directly selected. Alternatively, the EF_{LRATSI} may also be used in combination with a file EF_{LRPLMNSI} (Last RPLMN Selection Indication) in the SIM/USIM. For example,
- if Last_RAT_Sel_Ind (or EF_{LRATSI}) = 0, and EF_{LRPLMNSI} = 0, the wireless terminal does not directly use the RAT with a higher priority to access the RPLMN or the EPLMN; or
- if Last_RAT_Sel_Ind (or EF_{LRATSI}) = 0, and EF_{LRPLMNSI} = 1, the wireless terminal directly uses the RAT with a higher priority to access the RPLMN or the EPLMN;
   or,
- if Last_RAT_Sel_Ind (or EF_{LRATSI}) = 1, and EF_{LRPLMNSI} = 0, the wireless terminal does not directly use a RAT that is of a home PLMN (HPLMN) or an equivalent home PLMN (EHPLMN) and that has a higher priority to access a network; or
- if Last_RAT_Sel_Ind (or EF_{LRATSI}) = 1, and EF_{LRPLMNSI} = 1, the wireless terminal directly uses a RAT that is of a home PLMN (HPLMN) or an equivalent home PLMN (EHPLMN) and that has a higher priority to access a network.

The foregoing several setting manners are merely exemplary, and are not intended to limit the present invention.

The Last_RAT_Sel_Ind (or EF_{LRATSI}) may be modified in the following several manners:
(1) A fixed value or an initial value is set according to a need of an operator. For example, it is set as follows: when Last_RAT_Sel_Ind (or EF_{LRATSI}) = 1, the RAT used last time is not directly used to access the RPLMN or the EPLMN.
(2) A value of the Last_RAT_Sel_Ind (or EF_{LRATSI}) is updated according to a message delivered by the network. For example, a system message broadcast by the network may be expanded, so that the system message carries a Last RAT Selection Indication parameter, and UE sets/updates the value of the Last_RAT_Sel_Ind (or EF_{LRATSI}) according to the parameter.
(3) The Last_RAT_Sel_Ind (or EF_{LRATSI}) is modified according to a selection of a user. For example, the subscriber identity module interacts with a user interface UI of the wireless terminal to acquire a user setting, so as to update the Last_RAT_Sel_Ind (or EF_{LRATSI}).

Certainly, the foregoing cases are merely exemplary, and do not constitute a limitation on the present invention.

When it is determined not to directly use the RAT used by the wireless terminal last time to access the RPLMN or the EPLMN, step 1003 is performed.

Step 1003: Select, from the information about a PLMN and a corresponding RAT, a RAT with a higher priority to access an RPLMN or an EPLMN that corresponds to the RAT.

Step 1004: Determine priorities of an evolved universal terrestrial radio access network time division multiplexing E-UTRAN TDD access technology and an evolved universal terrestrial radio access network frequency division multiplexing E-UTRAN FDD access technology, and select a RAT with a higher priority that corresponds to E-UTRAN TDD and E-UTRAN FDD to access the RPLMN or the EPLMN; and/or determine priorities of a universal terrestrial radio access network frequency division multiplexing UTRAN FDD access technology and a universal terrestrial radio access network time division multiplexing UTRAN TDD access technology, and select a RAT with a higher priority that corresponds to UTRAN FDD and UTRAN TDD to access the RPLMN or the EPLMN.

A priority of the RAT may be indicated by modifying a parameter in the memory of the wireless terminal or modifying an Access Technology Identifier parameter in the subscriber identity module. For example,
four reserved bits in a parameter are used to separately represent the evolved universal terrestrial radio access network time division multiplexing E-UTRAN TDD access technology, the evolved universal terrestrial radio access network frequency division multiplexing E-UTRAN FDD access technology, the universal terrestrial radio access network frequency division multiplexing UTRAN FDD access technology, and the universal terrestrial radio access network time division multiplexing UTRAN TDD access technology. Values of the bits corresponding to the foregoing access technologies may be set to indicate priorities of the access technologies. Generally, the E-UTRAN TDD access technology is compared with the E-UTRAN FDD access technology, and the UTRAN FDD access technology is compared with the UTRAN TDD access technology. For example, the priorities of the evolved universal terrestrial radio access network time division multiplexing E-UTRAN TDD access technology and the evolved universal terrestrial radio access network frequency division multiplexing E-UTRAN FDD access technology are determined, and the RAT with a higher priority that corresponds to E-UTRAN TDD and E-UTRAN FDD is selected to access the RPLMN or the EPLMN; and/or the priorities of the universal terrestrial radio access network frequency division multiplexing UTRAN FDD access technology and the universal terrestrial radio access network time division multiplexing UTRAN TDD access technology are determined, and the RAT with a higher priority that corresponds to UTRAN FDD and UTRAN TDD is selected to access the RPLMN or the EPLMN.

According to Embodiment 4 of the present invention, when restarted, back to a network coverage area, or accessing a PLMN after an offline mode is turned off, a wireless terminal may choose to access the PLMN by using a RAT used last time or access the PLMN according to a RAT of the PLMN that has a higher priority, so that a requirement that an operator expects the wireless terminal to use a specific RAT can be satisfied, and optimum use of a network resource of the operator is implemented. Moreover, the terminal preferentially uses an access technology with a highest priority in a network, so that the terminal can make full use of a communication capability of the terminal, improving communication performance.

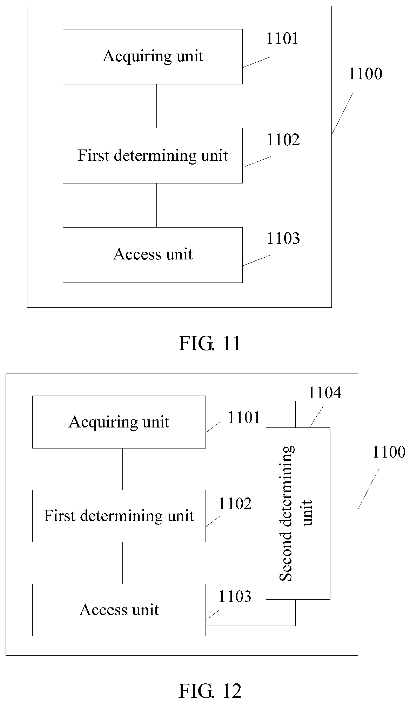

As shown in FIG. 11, FIG. 11 is a schematic structural diagram of a processor according to Embodiment 11 of the present invention. The processor 1100 includes an acquiring unit 1101, a first determining unit 1102, and an access unit 1103. The acquiring unit 1101 is configured to acquire information about a PLMN of a wireless terminal and a corresponding RAT, where the PLMN is a registered public land mobile network RPLMN and/or an equivalent public land mobile network EPLMN; the first determining unit 1102 is configured to determine whether to directly use a RAT used last time to access the PLMN that is the RPLMN and/or the EPLMN; and the access unit 1103 is configured to: if the determining unit determines not to directly use the RAT used by the wireless terminal last time to access the RPLMN or the EPLMN, select, from the information about a PLMN and a corresponding RAT, a RAT to access an RPLMN or an EPLMN that corresponds to the RAT.

Optionally, the access unit 1103 selects, from the information about a PLMN and a corresponding RAT, a RAT with a higher priority to access an RPLMN or an EPLMN that corresponds to the RAT.

Optionally, the information that is about a PLMN and a corresponding RAT and that is acquired by the acquiring unit 1103 includes a list of a PLMN and a corresponding RAT, a list item of the list includes a combination of a registered public land mobile network RPLMN and a RAT or a combination of an equivalent public land mobile network EPLMN and a RAT, and the combination of an RPLMN and a RAT or the combination of an EPLMN and a RAT is arranged according to a priority order or indicated by a priority.

Optionally, the acquiring unit 1101 acquires the information about a PLMN and a corresponding RAT from a memory of the wireless terminal or from a file of an operator controlled PLMN selector with access technology in a subscriber identity module.

Optionally, the acquiring unit 1101 acquires the information about a PLMN and a corresponding RAT from a memory of the wireless terminal or from a file of a user controlled PLMN selector with access technology in a subscriber identity module.

Optionally, as shown in FIG. 12, the processor further includes a second determining unit 1104, and the second determining unit 1104 is configured to determine whether the PLMN is a home PLMN HPLMN or an equivalent home PLMN EHPLMN of the wireless terminal; where
if the PLMN is the HPLMN or the EHPLMN of the wireless terminal, a list item of the information about a PLMN and a corresponding RAT is a combination of an HPLMN and a RAT or a combination of an EHPLMN and a RAT, and the information about a PLMN and a corresponding RAT is acquired by the acquiring unit 1101 from a memory of the wireless terminal or from a file of a home public land mobile network selector with RAT in a subscriber identity module; or
if the PLMN is not the HPLMN or the EHPLMN of the wireless terminal, it is determined whether an operator controlled PLMN selector with access technology includes a RAT list of an RPLMN or an EPLMN, where if the operator controlled PLMN selector with access technology includes a RAT list of an RPLMN or an EPLMN, the acquiring unit acquires information that is about a PLMN and a corresponding RAT and that is of an RPLMN or an EPLMN from a memory of the wireless terminal or from a file of an operator controlled PLMN selector with access technology in a subscriber identity module, or if the operator controlled PLMN selector with access technology does not include a RAT list of an RPLMN or an EPLMN, the acquiring unit 501 acquires information that is about a PLMN and a corresponding RAT and that is of an RPLMN or an EPLMN from a memory of the wireless terminal or from a file of a user controlled PLMN selector with access technology in a subscriber identity module.

Optionally, that the access unit 1103 selects, from the information about a PLMN and a corresponding RAT, a RAT with a higher priority to access the RPLMN or the EPLMN specifically includes:
determining priorities of an evolved universal terrestrial radio access network time division multiplexing E-UTRAN TDD access technology and an evolved universal terrestrial radio access network frequency division multiplexing E-UTRAN FDD access technology, and selecting a RAT with a higher priority that corresponds to E-UTRAN TDD and E-UTRAN FDD to access the RPLMN or the EPLMN; and/or
determining priorities of a universal terrestrial radio access network frequency division multiplexing UTRAN FDD access technology and a universal terrestrial radio access network time division multiplexing UTRAN TDD access technology, and selecting a RAT with a higher priority that corresponds to UTRAN FDD and UTRAN TDD to access the RPLMN or the EPLMN.

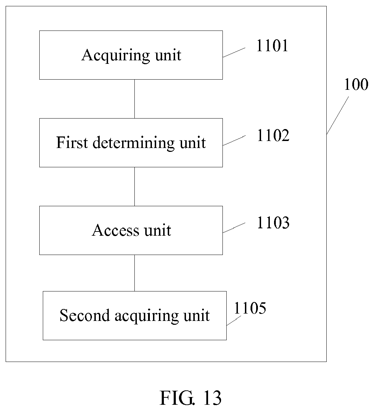

Optionally, as shown in FIG. 13, the processor further includes a second acquiring unit 1105, the second acquiring unit 1105 is configured to acquire RAT priority information by using the RPLMN or the EPLMN, and the access unit selects, according to the RAT priority information that is acquired by the second acquiring unit 1105 by using the PLMN, the RAT with a higher priority to access the RPLMN or the EPLMN that corresponds to the RAT.

Optionally, that the second acquiring unit 1105 acquires RAT priority information by using the RPLMN or the EPLMN is specifically: the second acquiring unit 1105 acquires the RAT priority information according to system information broadcast in a cell of the RPLMN or the EPLMN.

Optionally, that the second acquiring unit 1105 acquires RAT priority information by using the RPLMN or the EPLMN is specifically: the second acquiring unit 1105 acquires the RAT priority information according to registration accept information or location updating accept information that is sent by the RPLMN or the EPLMN.

Optionally, that the first determining unit 1102 determines whether to directly use a RAT used by the wireless terminal last time to access the PLMN is specifically:
the first determining unit 1102 determines, according to a first parameter in the memory of the wireless terminal or a second parameter in the subscriber identity module, whether to directly use the RAT used by the wireless terminal last time to access the RPLMN or the EPLMN.

An embodiment of the present invention further provides a wireless terminal, where the wireless terminal includes the processor shown in Embodiment 10 to Embodiment 13.

The processor or the wireless terminal shown in the foregoing embodiment is configured to implement the method in the foregoing embodiment shown in FIG. 8, FIG. 9, or FIG. 10. For details about a working procedure and principle of the wireless terminal and an implemented effect, reference may be made to the embodiment shown in FIG. 8, FIG. 9, or FIG. 10.

According to the processor and the wireless terminal that are provided in the embodiments of the present invention, when restarted, back to a network coverage area, or accessing a PLMN after an offline mode is turned off, the wireless terminal may choose to access the PLMN by using a RAT used last time or access the PLMN according to a RAT of the PLMN that has a higher priority, so that a requirement that an operator expects the wireless terminal to use a specific RAT can be satisfied, and optimum use of a network resource of the operator is implemented. Moreover, the terminal preferentially uses an access technology with a highest priority in a network, so that the terminal can make full use of a communication capability of the terminal, improving communication performance.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

Persons of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

It may be clearly understood by persons skilled in the art that, for the purpose of convenient and brief description, for a detailed working process of the foregoing system, apparatus, and unit, reference may be made to a corresponding process in the foregoing method embodiments, and details are not repeated herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separated, and parts shown as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementation manners of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A wireless communication method, comprising:
acquiring (101, 201, 301, 401), by a wireless terminal, information about a public land mobile network, PLMN, and a corresponding radio access technology, RAT, wherein the PLMN is a registered public land mobile network, RPLMN, and/or an equivalent public land mobile network, EPLMN;
determining (102, 202, 302, 402), by the wireless terminal, whether to directly use a RAT used by the wireless terminal last time to access the RPLMN or the EPLMN; and
when a result of the determining (102, 202, 302, 402) is to directly use the RAT used by the wireless terminal last time to access the RPLMN or the EPLMN, select this RAT to access the RPLMN or the EPLMN; whereras,
when a result of the determining (102, 202, 302, 402) is not to directly use the RAT used by the wireless terminal last time to access the RPLMN or the EPLMN, selecting (203), by the wireless terminal from the information about a PLMN and a corresponding RAT, a RAT with a higher priority to access an RPLMN or an EPLMN that is mapped to the RAT by said information,
**characterized in that**
the selecting (203), from the information about a PLMN and a corresponding RAT, a RAT with a higher priority to access an RPLMN or an EPLMN that corresponds to the RAT comprises:
receiving a registration accept message or a location updating accept message that is sent by the RPLMN or the EPLMN, and selecting, according to the RAT priority information comprised in the registration accept message or the location updating accept message, the RAT with a higher priority to access the RPLMN or the EPLMN.

2. The method according to claim 1, wherein the information about a PLMN and a corresponding RAT comprises a list of a PLMN and a corresponding RAT, a list item of the list comprises a combination of an RPLMN and a RAT or a combination of an EPLMN and a RAT, and the combination of an RPLMN and a RAT or the combination of an EPLMN and a RAT is arranged according to a priority order or indicated by a priority.

3. The method according to any one of claims 1 to 2, wherein the selecting (403), from the information about a PLMN and a corresponding RAT, a RAT with a higher priority to access an RPLMN or an EPLMN that corresponds to the RAT comprises:
determining (404) priorities of an evolved universal terrestrial radio access network time division multiplexing, E-UTRAN TDD, access technology and an evolved universal terrestrial radio access network frequency division multiplexing, E-UTRAN FDD, access technology, and selecting a RAT with a higher priority in RATs that correspond to E-UTRAN TDD and E-UTRAN FDD to access the RPLMN or the EPLMN; and/or
determining (404) priorities of a universal terrestrial radio access network frequency division multiplexing, UTRAN FDD, access technology and a universal terrestrial radio access network time division multiplexing, UTRAN TDD, access technology, and selecting a RAT with a higher priority in RATs that correspond to UTRAN FDD and UTRAN TDD to access the RPLMN or the EPLMN.

4. The method according to any one of claims 1 to 3, wherein the determining (102, 202, 302, 402), by the wireless terminal, whether to directly use a RAT used by the wireless terminal last time to access the RPLMN or the EPLMN is specifically:
determining, by the wireless terminal according to a first parameter in the memory or a second parameter in the subscriber identity module, whether to directly use the RAT used by the wireless terminal last time to access the RPLMN or the EPLMN.

## Patentansprüche

1. Drahtloskommunikationsverfahren, das Folgendes umfasst:
Erfassen (101, 201, 301, 401), durch ein drahtloses Endgerät, von Informationen über ein öffentliches terrestrisches Mobilfunknetz (PLMN, Public Land Mobile Network) und eine entsprechende Funkzugangstechnologie (RAT, Radio Access Technology), wobei das PLMN ein registriertes öffentliches terrestrisches Mobilfunknetz, RPLMN, und/oder ein äquivalentes öffentliches terrestrisches Mobilfunknetz, EPLMN, ist;
Bestimmen (102, 202, 302, 402), durch das drahtlose Endgerät, ob eine RAT direkt verwendet werden soll, die durch das drahtlose Endgerät beim letzten Mal zum Zugreifen auf das RPLMN oder das EPLMN verwendet wurde; und
wenn ein Ergebnis des Bestimmens (102, 202, 302, 402) ist, die RAT direkt zu verwenden, die durch das drahtlose Endgerät beim letzten Mal zum Zugreifen auf das RPLMN oder das EPLMN verwendet wurde, Auswählen dieser RAT zum Zugreifen auf das RPLMN oder das EPLMN; wohingegen,
wenn ein Ergebnis des Bestimmens (102, 202, 302, 402) ist, die RAT nicht direkt zu verwenden, die durch das drahtlose Endgerät beim letzten Mal zum Zugreifen auf das RPLMN oder das EPLMN verwendet wurde, Auswählen (203), durch das drahtlose Endgerät aus den Informationen über ein PLMN und eine entsprechende RAT, einer RAT mit einer höheren Priorität zum Zugreifen auf ein RPLMN oder ein EPLMN, das der RAT durch diese Informationen zugeordnet ist,
**dadurch gekennzeichnet, dass**
das Auswählen (203), aus den Informationen über ein PLMN und eine entsprechende RAT, einer RAT mit einer höheren Priorität zum Zugreifen auf ein RPLMN oder ein EPLMN, das der RAT entspricht, Folgendes umfasst:
Empfangen einer Registrierungsannahmenachricht oder einer Positionsaktualisierungsannahmenachricht, die durch das RPLMN oder das EPLMN gesendet wird, und Auswählen, gemäß den RAT-Prioritätsinformationen, die in der Registrierungsannahmenachricht oder der Positionsaktualisierungsannahmenachricht enthalten sind, der RAT mit einer höheren Priorität zum Zugreifen auf das RPLMN oder das EPLMN.

2. Verfahren nach Anspruch 1, wobei die Informationen über ein PLMN und eine entsprechende RAT eine Liste eines PLMN und einer entsprechenden RAT umfasst, ein Listenelement der Liste eine Kombination aus einem RPLMN und einer RAT oder eine Kombination aus einem EPLMN und einer RAT umfasst, und die Kombination aus einem RPLMN und einer RAT oder die Kombination aus einem EPLMN und einer RAT gemäß einer Prioritätsreihenfolge angeordnet ist oder durch eine Priorität angezeigt ist.

3. Verfahren nach einem der Ansprüche 1 bis 2, wobei das Auswählen (403), aus den Informationen über ein PLMN und eine entsprechende RAT, einer RAT mit einer höheren Priorität zum Zugreifen auf ein RPLMN oder ein EPLMN, das der RAT entspricht, Folgendes umfasst:
Bestimmen (404) von Prioritäten einer Zugangstechnologie für ein entwickeltes universelles terrestrisches Funkzugangsnetz mit Zeitmultiplex (E-UTRAN TDD, Evolved Universal Terrestrial Radio Access Network Time Division Multiplexing) und einer Zugangstechnologie für ein entwickeltes universelles terrestrisches Funkzugangsnetz mit Frequenzmultiplex (E-UTRAN FDD, Evolved Universal Terrestrial Radio Access Network Frequency Division Multiplexing), und Auswählen einer RAT mit einer höheren Priorität in RATs, die E-UTRAN TDD und E-UTRAN FDD entsprechen, zum Zugreifen auf das RPLMN oder das EPLMN; und/oder
Bestimmen (404) von Prioritäten einer Zugangstechnologie für ein universelles terrestrisches Funkzugangsnetz mit Frequenzmultiplex (UTRAN FDD, Universal Terrestrial Radio Access Network Frequency Division Multiplexing) und einer Zugangstechnologie für ein universelles terrestrisches Funkzugangsnetz mit Zeitmultiplex (UTRAN TDD, Universal Terrestrial Radio Access Network Time Division Multiplexing), und Auswählen einer RAT mit einer höheren Priorität in RATs, die UTRAN FDD und UTRAN TDD entsprechen, zum Zugreifen auf das RPLMN oder das EPLMN.

4. Verfahren nach einem der Ansprüche 1 bis 3, wobei das Bestimmen (102, 202, 302, 402), durch das drahtlose Endgerät, ob eine RAT direkt verwendet werden soll, die durch das drahtlose Endgerät beim letzten Mal zum Zugreifen auf das RPLMN oder das EPLMN verwendet wurde, speziell Folgendes ist:
Bestimmen, durch das drahtlose Endgerät gemäß einem ersten Parameter im Speicher oder einem zweiten Parameter im Teilnehmeridentitätsmodul, ob die RAT direkt verwendet werden soll, die durch das drahtlose Endgerät beim letzten Mal zum Zugreifen auf das RPLMN oder das EPLMN verwendet wurde.

## Revendications

1. Procédé de communication sans fil, consistant à :
acquérir (101, 201, 301, 401), par un terminal sans fil, une information sur un réseau mobile terrestre public (PLMN) et une technologie d'accès radio (RAT) correspondante, le PLMN étant un réseau mobile terrestre public enregistré (RPLMN) et/ou un réseau mobile terrestre public équivalent (EPLMN) ;
déterminer (102, 202, 302, 402), par le terminal sans fil, s'il faut utiliser directement une RAT utilisée la dernière fois par le terminal sans fil pour accéder au RPLMN ou à l'EPLMN ; et
quand un résultat de la détermination (102, 202, 302, 402) est qu'il faut utiliser directement la RAT utilisée la dernière fois par le terminal sans fil pour accéder au RPLMN ou à l'EPLMN, sélectionner cette RAT pour accéder au RPLMN ou à l'EPLMN ; tandis que,
quand un résultat de la détermination (102, 202, 302, 402) est qu'il ne faut pas utiliser directement la RAT utilisée la dernière fois par le terminal sans fil pour accéder au RPLMN ou à l'EPLMN, sélectionner (203), par le terminal sans fil, à partir de l'information sur un PLMN et sur une RAT correspondante, une RAT ayant une priorité plus élevée pour accéder à un RPLMN ou à un EPLMN qui est mis en correspondance avec la RAT par ladite information,
le procédé étant **caractérisé en ce que** :
la sélection (203), à partir de l'information sur un PLMN et sur une RAT correspondante, d'une RAT ayant une priorité plus élevée pour accéder à un RPLMN ou à un EPLMN qui correspond à la RAT, consiste à :
recevoir un message d'acceptation d'enregistrement ou un message d'acceptation de mise à jour de localisation qui est envoyé par le RPLMN ou l'EPLMN, et sélectionner, selon l'information de priorité de RAT comprise dans le message d'acceptation d'enregistrement ou le message d'acceptation de mise à jour de localisation, la RAT ayant une priorité plus élevée pour accéder au RPLMN ou à l'EPLMN.

2. Procédé selon la revendication 1, dans lequel l'information sur un PLMN et sur une RAT correspondante comprend une liste d'un PLMN et d'une RAT correspondante, un élément de liste de la liste comprenant une combinaison d'un RPLMN et d'une RAT ou une combinaison d'un EPLMN et d'une RAT, et la combinaison d'un RPLMN et d'une RAT ou la combinaison d'un EPLMN et d'une RAT étant agencée selon un ordre de priorité ou indiquée par une priorité.

3. Procédé selon l'une quelconque des revendications 1 et 2, dans lequel la sélection (403), à partir de l'information sur un PLMN et sur une RAT correspondante, d'une RAT ayant une priorité plus élevée pour accéder à un RPLMN ou à un EPLMN qui correspond à la RAT, consiste à :
déterminer (404) des priorités d'une technologie d'accès à multiplexage par répartition dans le temps de réseau universel évolué d'accès radio terrestre (E-UTRAN TDD) et d'une technologie d'accès à multiplexage par répartition de la fréquence de réseau universel évolué d'accès radio terrestre (E-UTRAN FDD), et sélectionner une RAT ayant une priorité plus élevée parmi des RAT qui correspondent à la technologie d'accès E-UTRAN TDD et à la technologie d'accès E-UTRAN FDD pour accéder au RPLMN ou à l'EPLMN ; et/ou
déterminer (404) des priorités d'une technologie d'accès à multiplexage par répartition de la fréquence de réseau universel d'accès radio terrestre (UTRAN FDD) et d'une technologie d'accès à multiplexage par répartition dans le temps de réseau universel d'accès radio terrestre (UTRAN TDD), et sélectionner une RAT ayant une priorité plus élevée parmi des RAT qui correspondent à la technologie d'accès UTRAN FDD et à la technologie d'accès UTRAN TDD pour accéder au RPLMN ou à l'EPLMN.

4. Procédé selon l'une quelconque des revendications 1 à 3, dans lequel la détermination (102, 202, 302, 402), par le terminal sans fil, de s'il faut utiliser directement une RAT utilisée la dernière fois par le terminal sans fil pour accéder au RPLMN ou à l'EPLMN, consiste spécifiquement à :
déterminer, par le terminal sans fil, selon un premier paramètre dans la mémoire ou un second paramètre dans le module d'identité d'abonné, s'il faut utiliser directement la RAT utilisée la dernière fois par le terminal sans fil pour accéder au RPLMN ou à l'EPLMN.
